# EUROPEAN PATENT SPECIFICATION

(11) **EP 2 763 458 B1**
(45) Date of publication and mention of the grant of the patent: **28.06.2017**
(21) Application number: 12836687.9
(22) Date of filing: 28.09.2012
(51) Int. Cl.: H04W 28/20, H04M 3/00, H04W 88/14, H04W 88/16

(54) **COMMUNICATION SYSTEM AND METHOD AND DEVICE**
KOMMUNIKATIONSSYSTEM SOWIE VERFAHREN UND VORRICHTUNG
SYSTÈME DE COMMUNICATION, PROCÉDÉ ET DISPOSITIF

(30) Priority: 30.09.2011 JP 2011217383
(43) Date of publication of application: 06.08.2014
(73) Proprietor: NEC Corporation, Tokyo 108-8001 (JP)
(72) Inventor: NISHIGORI, Yutaka, Tokyo 1008-8001 (JP); IWAI, Takanori, Tokyo 1008-8001 (JP); TAMURA, Toshiyuki, Tokyo 1008-8001 (JP)
(74) Representative: MacDougall, Alan John Shaw
(86) International application number: PCT/JP2012/075134
(87) International publication number: WO 2013/047772

(56) References cited:
- JP-A- 2005 229 447
- JP-A- 2006 352 444
- US-A1- 2010 111 025
- SIEMENS: 3GPP DRAFT; S2-012852, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kobe, Japan; 20011106, 6 November 2001 (2001-11-06), XP050236579, [retrieved on 2001-11-06]
- NORTEL: "QoS management per UE and per traffic class tunnel", 3GPP DRAFT; S2H060395_QOS MANAGEMENT PER UE AND PER QOS RAFFIC CLASS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Paris, France; 20060403 - 20060406, 28 March 2006 (2006-03-28), XP050625210, [retrieved on 2006-03-28]
- NOKIA SIEMENS NETWORKS ET AL.: 'Duplicate Sl-U SGW TEIDs at eNB' 3GPP TSG-RAN WG3 #72 MEETING R3- 111450 13 May 2011, pages 1 - 3, XP050498311

## Description

### TECHNICAL FIELD

### [CROSS-REFERENCE TO RELATED APPLICATION]

The present invention is based upon and claims the benefit of the priority of Japanese Patent Application No. 2011-217383 (filed on September 30, 2011).

The present invention relates to a communication system, method, and apparatus.

In the present document, abbreviations are as follows:
DNS: Domain Name System
eNodeB: evolved or enhanced NodeB
EPC: Evolved Packet Core
EUTRAN: Evolved-Universal Terrestrial Radio Access Network
FQDN: Fully Qualified Domain Name
GBR: Guaranteed Bit Rate
GGSN: Gateway GPRS Support Node
GPRS: General Packet Radio Service
GTP: GPRS Tunneling Protocol
HO: Hand Over
HLR: Home Location Register
HSS: Home Subscriber Server
IP: Internet Protocol
IPv4: Internet Protocol version 4
IPv6: Internet Protocol version 6
MBMS: Multimedia Broadcast and Multicast Service
MME: Mobility Management Entity
MS: Mobile Station
MTC: Machine Type Communication
MTM: Machine To Machine communication
PDN: Packet Data Network
PDP: Packet Data Protocol
PGW: PDN Gateway
PMIP: Proxy Mobile Internet Protocol
QoS: Quality of Service
RAB: Radio Access Bearer
RNC: Radio Network Controller
SGSN: Serving GPRS Support Node
SMS: Short Message Service
SGW: Serving Gateway
UTRAN: Universal Terrestrial Radio Access Network
WiMAX: Worldwide Interoperability for Microwave Access

### BACKGROUND

In a radio access network UTRAN or an EUTRAN, it is necessary to set a tunnel to provide mobility for each terminal. That is, a tunnel between a user data gateway apparatus and a user data mobility providing apparatus is created for each terminal, in a core network connected to a radio access network in a mobile communication system. The user data mobility providing apparatus stores and manages bearer information including a tunnel identifier, an address of an apparatus that constitutes an end point of a tunnel and so forth, necessary for setting the tunnel for establishing a network bearer with the user data gateway apparatus. The user data gateway apparatus allocates to a terminal that has attached, an address for connecting to an external packet data network, and also performs tunnel setting and so forth for establishing a bearer to the user data mobility providing apparatus. In addition, the user data gateway apparatus performs charging control, control of quality of service (QoS), and so forth.

In the core network connected to the UTRAN (NodeB /RNC), the user data gateway apparatus corresponds to a GGSN or a PGW. A user data mobility providing apparatus combined with a subscriber management apparatus corresponds to an SGSN. In a core network (Evolved Packet Core:
EPC) connected to the E-UTRAN (eNodeB), the user data gateway apparatus corresponds to a PGW , and the user data mobility providing apparatus corresponds to an SGW. A GTP Tunneling Protocol) tunnel, a tunnel in accordance with a PMIP , or the like is employed as a tunnel.

Patent Literature (PTL) 1 discloses an arrangement in which IP address aggregation is enabled in allocating an IP address to reduce a storage amount of a routing table. Patent Literature 2 discloses allocation of an IP address of a PGW to a terminal in handover.

Patent Literature 3 discloses the use of a GTP tunnel between the SGSN and the GGSN shared by multiple subscribers.

3GPP DRAFT S2-012852 (SIEMENS, titled "MBMS - Architectural Principles", 6 November 2001) discloses GTP tunnels shared by multiple terminals.

### CITATION LIST

[PTL 1] JP Patent Kokai Publication No. JP2004-274621A
[PTL 2] JP Patent Kokai Publication No. JP2010-288223A
[PTL 3] JP 2005 229447 A

### SUMMARY

The following is an analysis given by the present invention.

As described above, a user data gateway apparatus and a user data mobility providing apparatus need to manage a tunnel put between both of the user data gateway apparatus and the user data mobility providing apparatus, for each terminal.

Consequently, this greatly affects the network in terms of the following respects, for example:
(A) band reservation for a network facility for guaranteeing a band for each terminal;
(B) load of tunnel management on network facilities for performing tunnel management for each terminal;
(C) the number of IP addresses for IP address dispensing for each terminal.

In order to cope with the above-mentioned problem that the tunnel management greatly affects the network, it is necessary to increase performance, capability, function or the like of a network resource and a network facility, for example. To take an example, in order to cope with an increase in the number of tunnels for respective terminals, capability and performance that can accommodate an increase in processing such as tunnel setting and management or IP address dispensing are required for the user data gateway apparatus and the user data mobility providing apparatus. Alternatively, addition of the above-mentioned apparatuses (user data gateway apparatus and user data mobility providing apparatus) becomes necessary in order to enable the user data mobility providing apparatus to accommodate the number of terminals exceeding a tunnel setting maximum number. Or, high precision or high performance of band control or band extension becomes necessary in order to secure a required band.

Regarding a terminal or a service configured to perform important data communication, in which a total communication amount for each terminal is small, and diversification of communication timing is allowed, but band guarantee needs to be performed, a band guarantee is performed to a tunnel for each tunnel. Consequently, bands more than necessary may be secured.

The present invention has been therefore invented to solve the above-mentioned problem. An object of the invention is to provide a method, a system, and a apparatus in which bearers can be aggregated in a mobile system and increases in network resource and network facility can be suppressed. The present invention aims at providing a method, a system, and an apparatus in which the above-mentioned object is achieved and excessive band reservation can be avoided.

The present invention for solving the above-mentioned problems is generally configured as follows (but is not limited to the following configurations)

The present invention provides systems, methods, gateway apparatus, mobility providing apparatus, and subscriber management apparatus as disclosed in the appended independent claims. Optional, but advantageous features are disclosed in the appended dependent claims.

The invention is defined by the subject-matter of the independent claims.

According to the present invention, network bearers can be aggregated, and necessary increases in network resources and facilities can be reduced. Further, according to the present invention, excessive band reservation can be avoided.

### BRIEF DESCRIPTION OF DRAWINGS

Fig. 1 is a diagram illustrating a system arrangement in a first exemplary embodiment of the present invention.
Fig. 2 is a table illustrating an example of a tunnel management table in a user data gateway apparatus in the first exemplary embodiment of the present invention.
Fig. 3 is a table illustrating an example of a tunnel management table in a user data mobility providing apparatus in the first exemplary embodiment of the present invention.
Fig. 4 is a diagram illustrating an example of a sequence when a first terminal of a terminal group is connected in the first exemplary embodiment of the present invention.
Fig. 5 is a table illustrating terminal group information in the first exemplary embodiment of the present invention.
Fig. 6 is a diagram explaining a sequence when a second or subsequent one of terminals in the terminal group is connected in the first exemplary embodiment of the present invention.
Fig. 7 is a diagram illustrating an example of a sequence when a terminal for which a bearer has been already established and a communication path in a radio segment has already been released restores the communication path in the radio segment in the first exemplary embodiment of the present invention.
Fig. 8 is a diagram illustrating a system arrangement in a second exemplary embodiment of the present invention.
Fig. 9 is a table illustrating an example of a tunnel management table in a user data mobility management apparatus in the second exemplary embodiment of the present invention.
Fig. 10 is a diagram illustrating an example of a sequence when a first terminal of a terminal group is connected in the second exemplary embodiment of the present invention.
Fig. 11 is a diagram explaining a sequence when a second or subsequent one of terminals in the terminal group is connected in the second exemplary embodiment of the present invention.
Fig. 12 is a diagram illustrating an operation sequence when a per-terminal communication path is restored from a state where the per-terminal communication path has already been released and no communication is performed, in the second exemplary embodiment of the present invention.
Fig. 13 is a diagram explaining an operation sequence for controlling a timing of restoring a communication path from a network side in a third exemplary embodiment of the present invention.
Fig. 14 is a diagram explaining a fourth exemplary embodiment of the present invention.
Fig. 15 is a diagram explaining an operation sequence in the fourth exemplary embodiment of the present invention.
Fig. 16 is a table illustrating an example of a tunnel management table of a user data gateway apparatus in the fourth exemplary embodiment of the present invention.
Fig. 17 is a diagram explaining a firth exemplary embodiment of the present invention.
Fig. 18 is a diagram illustrating a network configuration in an E-UTRAN in a first example.
Fig. 19 is a diagram illustrating a sequence when bearer establishment is performed in the E-UTRAN in the first example.
Fig. 20 is a diagram illustrating a sequence when bearer establishment is performed in the E-UTRAN.
Fig. 21 is a diagram illustrating a sequence when bearer establishment is performed for a second or subsequent one of terminals in a same group in the E-UTRAN in the first example.
Fig. 22 is a diagram illustrating a sequence when an interface S1 is restored in an E-UTRAN in a second example.
Fig. 23 is a diagram illustrating a sequence for simultaneously reading terminals in a same group in an E-UTRAN in a third example.
Fig. 24 is a diagram illustrating a network configuration in a UTRAN in a fourth example.
Fig. 25 is a diagram illustrating a sequence when bearer establishment is performed in the UTRAN in the fourth example.
Fig. 26 is a diagram illustrating a sequence when bearer establishment is performed for a second or subsequent one of terminals in a same group in an UTRAN in the fourth example.
Fig. 27 is a diagram illustrating a sequence when an interface Iu is restored in an E-UTRAN in a fifth example.
Fig. 28 is a diagram illustrating a sequence for simultaneously reading terminals in a group in an E-UTRAN in a sixth example.

### MODES

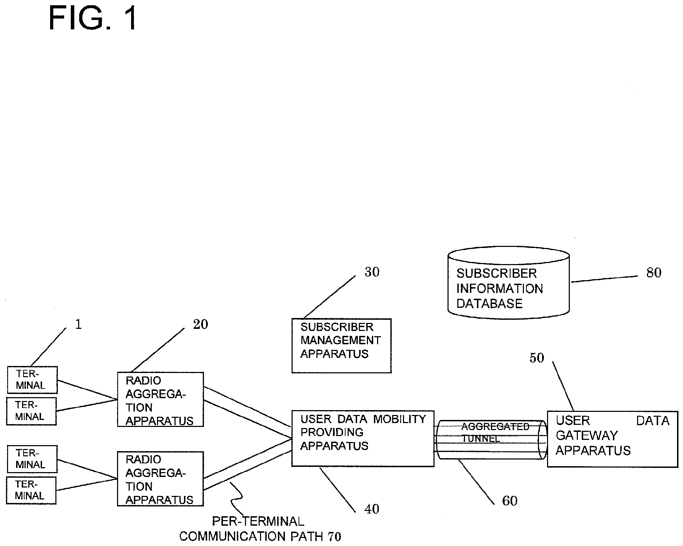

The following describes an overview of the present invention with reference to Fig. 1, and then exemplary embodiments of the present invention. According to the present invention, a core network of a mobile communication system includes a user data gateway apparatus (50) connected to an external network and a user data mobility providing apparatus (40) configured to perform data transfer between a radio aggregating apparatus (20) and the user data gateway apparatus (50) to provide a mobility function extending across the radio aggregating apparatuses. When setting a tunnel between the user data gateway apparatus (50) and the user data mobility providing apparatus (40) based on a request from a terminal (1), an aggregated tunnel (60) in which tunnels for a terminal group of terminals (terminal group) inclusive the terminal are aggregated and made common to the terminal group is set based on subscriber information of the terminal.

In a network configured to provide mobility of packet data by tunneling, tunnels are aggregated by IP delegation (delegation of IP address) to enable provision of mobility in a part segment of the network to a plurality of terminals, using one tunnel. Some exemplary embodiments will be described below.

### <First Exemplary Embodiment>

Fig. 1 is a diagram illustrating an arrangement of a first exemplary embodiment of the present invention. The first exemplary embodiment will be described with reference to Fig. 1. Referring to Fig. 1, a user data gateway apparatus 50 forwards packets addressed to a plurality of terminals 1 to a user data mobility providing apparatus 40 through a common aggregated tunnel 60.

The user data mobility providing apparatus 40 identifies a packet addressed to the terminal 1 obtained from the common aggregated tunnel 60, identifies to which terminal the packet is addressed, and then forwards the packet to a radio aggregating apparatus 20 that accommodates the corresponding terminal 1.

In this way, according to the exemplary embodiment, the user data mobility providing apparatus 40 identifies a destination of a packet, to allow a tunnel between the user data gateway apparatus 50 and the user data mobility providing apparatus 40 to be shared among a plurality of terminals 1. That is, mobility can be provided to a plurality of terminals 1 using a single aggregated tunnel 60.

The user data gateway apparatus 50 performs IP address dispensing by initially aggregating IP addresses, for terminals (terminal group) that can be accommodated in the same tunnel, as an IP address band. By doing so, IP delegation can be achieved, and packets addressed to a plurality of the terminals can be forwarded to the common aggregated tunnel 60.

The user data mobility providing apparatus 40 dispenses an IP address for each terminal 1 from the IP address band for a group of terminals 1 allocated from the user data gateway apparatus 50. With this arrangement, the user data mobility providing apparatus 40 determines to which terminal a packet forwarded to the user data mobility providing apparatus 40 through the common aggregated tunnel 60 is addressed, and then forwards the packet to one of the radio aggregating apparatuses 20 through a per-terminal communication path 70.

As described above, according to this exemplary embodiment, a tunnel between the user data gateway apparatus 50 and the user data mobility providing apparatus 40 can be made common to a plurality of terminals 1 (terminal group). Then, by performing band guarantee for the aggregated tunnel 60 provided common to the plurality of terminals 1, provision of band guarantee to a terminal group is made possible. Band securing based on a band that is actually needed is made possible.

Referring to Fig. 1, the radio aggregating apparatus 20 provides a function of performing radio control and accommodating the terminal 1 via a radio access. In a UTRAN, the radio aggregating apparatus 20 corresponds to a NodeB (base station apparatus)/RNC. The radio aggregating apparatus 20 in an E-UTRAN corresponds to an eNodeB.

A subscriber management apparatus 30 includes a function that performs authentication of a terminal when the terminal is accommodated and that holds profile information for each terminal. A packet received from the user data gateway apparatus 50 through the user data mobility providing apparatus 40 is forwarded to the radio aggregating apparatus 20. A packet received from the radio aggregating apparatus 20 is forwarded to the user data gateway apparatus 50. Thus, a mobility function extending across radio aggregating apparatuses 20 for a terminal is provided.

In a core network connected to the UTRAN, a combination of the subscriber management apparatus 30 and the user data mobility providing apparatus 40 corresponds to an SGSN. In a core network (EPC) connected to the E-UTRAN, the subscriber management apparatus 30 corresponds to an MME, and the user data mobility providing apparatus 40 corresponds to an SGW.

The user data gateway apparatus 50 provides a function of serving as an end point of an external network for a packet addressed to a terminal and forwarding the packet addressed to the terminal to the user data mobility providing apparatus 40 through the tunnel.

In the core network connected to the UTRAN, the user data gateway apparatus 50 corresponds to a GGSN or a PGW. In the core network connected to the E-UTRAN, the user data gateway apparatus 50 corresponds to a PGW.

A subscriber information database 80 is an apparatus configured to hold contract information on each terminal and the like and to provide subscriber information to the subscriber management apparatus 30, upon as a trigger such as connection of the terminal to a radio network or the like.

In the core network connected to the UTRAN, the subscriber information database 80 corresponds to an HLR. In the core network connected to the E-UTRAN, the subscriber information database 80 corresponds to an HSS.

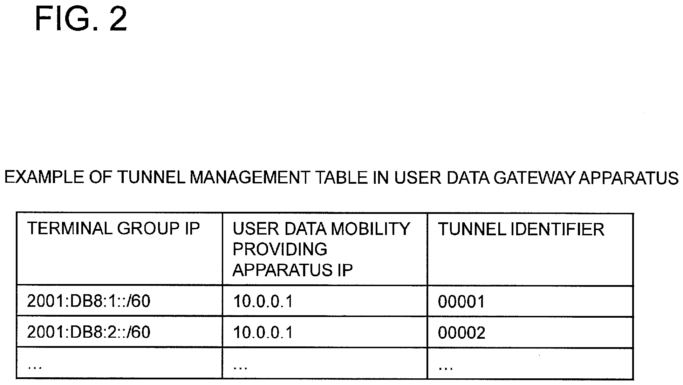

The following describes details of tunnel management by the user data gateway apparatus 50 using Fig. 2. Referring to Fig. 2, a terminal group IP indicates a terminal IP address band dispensed by the user data gateway apparatus 50. The user data gateway apparatus 50 handles a terminal group IP subject to IP delegation for a plurality of terminals, as one entry.

In Fig.2, a user data mobility providing apparatus IP and a tunnel identifier indicate information on a tunnel associated with the terminal group IP.

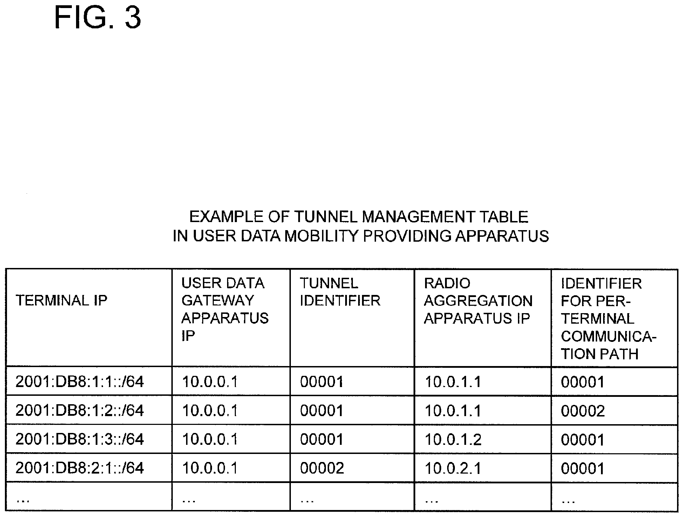

Next, details of tunnel management by the user data mobility providing apparatus 40 will be described. Fig. 3 is a table illustrating a tunnel management table in the user data mobility providing apparatus 40. A terminal IP in Fig. 3 indicates an IP address dispensed to an individual one of the terminals.

A user data gateway apparatus IP indicates an IP address of the user data gateway apparatus.

A tunnel identifier indicates information on a tunnel between the user data mobility providing apparatus 40 and the user data gateway apparatus 50.

A radio aggregating apparatus IP indicates an IP address of a radio aggregating apparatus. An identifier for a per-terminal communication path indicates identification information of the per-terminal communication path 70 between the radio aggregating apparatus and the user data mobility providing apparatus 40.

Though the example in each of Figs. 2 and 3, an example where IPv6 (Internet Protocol version 6) is used for each terminal IP address, in IPv4 (Internet Protocol version 4), the same can also be similarly applied. In the IPv6, an IP address is formed of 128 bits, is partitioned by colons for every four digits, and is hexadecimally represented (with 0 at the head of the address omitted). A portion of 64 bits from a head of the address indicates a sub-net mask in the drawing.

Though the example where the IPv4 is used for each apparatus IP was shown in each of Figs. 2 and 3, the IPv6 can also be similarly applied. The tunnel identifier is only an example, and information whereby a tunnel can be uniquely identified between apparatuses opposed to each other may be used. Since each terminal 1 in Fig. 1 is known to a person skilled in the art, description of a configuration of the terminal 1 is omitted.

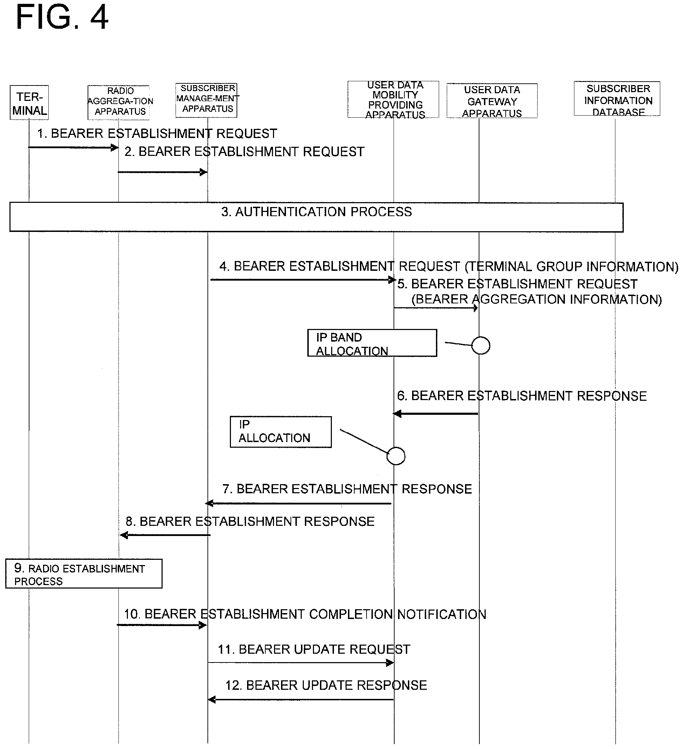

Next, an operation at a time of connection of a first one of the terminals of a terminal group in Fig. 1 will be described with reference to a sequence illustrated in Fig. 4, as an operation at a time of establishment of the tunnel. In the following description, sequence number 1 for a sequence is noted in brackets, as in a "bearer establishment request (1)" in order to differentiate with reference numeral 1 (reference numeral of a constituent element) of UE in Fig. 1. Other sequence numbers are also noted in the same manner. Referring to Fig. 4, "1. bearer establishment request", for example, indicates that sequence 1 is transmission of a bearer establishment request from a terminal to a radio aggregating apparatus.

Referring to Fig. 4, the terminal 1 transmits the bearer establishment request (1) to the radio aggregating apparatus 20. The subscriber management apparatus 30, upon reception of a bearer establishment request (2) relayed by the radio aggregating apparatus 20, cooperates with the subscriber information database 80 to perform an authorization process (3) of the terminal 1. Then, the subscriber management apparatus 30 transmits a bearer establishment request (4) to the user data mobility providing apparatus 40. In this case, the subscriber management apparatus 30 acquires contract information on the terminal 1 from the subscriber information database 80 to obtain terminal group information.

This terminal group information includes:
- a group identifier;
- the number of terminals to be held in a group (the number of necessary IP addresses), a prefix length (the first half of an IP address)/sub-net mask length;
- an upper limit number of simultaneous uses of an aggregated bearer, and so forth.

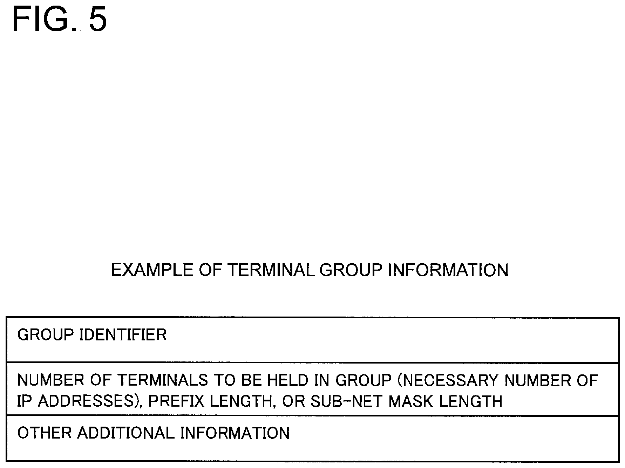

The subscriber management apparatus 30 determines whether or not bearer aggregation is needed for the terminal, based on the terminal group information. When the bearer aggregation is performed, the subscriber management apparatus 30 appends the terminal group information for bearer aggregation to the bearer establishment request (4), and notifies the resulting bearer establishment request (4) to the user data mobility providing apparatus 40. An example of the terminal group information to be appended to the bearer establishment request (4) and then to be notified to the user data mobility providing apparatus 40 is shown in Fig. 5. The group identifier, the number of terminals to be held in the group (the number of necessary IP addresses), the prefix/sub-net mask length, and other additional information are included in the group terminal information to be added to the bearer establishment request (4).

Though no particular limitation is imposed, the subscriber management apparatus 30 may use a DNS, which is a system configured to associate a host name and an IP address, to select the user data mobility providing apparatus 40 such that the terminals in the same group use the same user data mobility providing apparatus 40 when the bearer aggregation is performed. When using the DNS, an FQDN (a domain name including all information from top-level information) including the group identifier is associated with an IP address for the user data mobility providing apparatus 40 in a DNS entry. Then, with an inquiry using the FQDN including the group identifier, as a key, the same user data mobility providing apparatus 40 can be thereby derived.

Referring to Fig. 4, the user data mobility providing apparatus 40, upon reception of the bearer establishment request (4), recognizes that the bearer aggregation is to be performed because the terminal group information is given to the bearer establishment request (4), and gives bearer aggregation information to a bearer establishment request (5) for the user data gateway apparatus 50.

The bearer aggregation information is an information element including the necessary number of IP addresses. Other information such as the group identifier may be given to the bearer aggregation information in view of output of billing information at the user data gateway apparatus 50 or the like.

The user data gateway apparatus 50, upon reception of the bearer establishment request (5), recognizes the bearer aggregation is to be preformed because the bearer aggregation information is given to the bearer establishment request (5).

The user data gateway apparatus 50 executes dispensing an IP address band that satisfies the necessary number of IP addresses, when dispensing an IP address to the terminal 1 to implement IP delegation.

Further, the user data gateway apparatus 50 sets quality of service (QoS) information associated with the terminal group in the aggregated tunnel 60, as necessary.

Then, the user data gateway apparatus 50 returns to the user data mobility providing apparatus 40 a bearer establishment response (6) to which information on an IP address band has been given.

The user data mobility providing apparatus 40, upon reception of the bearer establishment response (6), executes dispensing the IP address for the terminal 1 from the IP address band.

In the UTRAN, this corresponds to a PDP context activation (PDP Context Activation) process after an Attach process in response to an Attach Request has been performed. The Attach Request is a bearer establishment request.

The Attach process herein complies with 3GPP TS23.060 6.5.3. The PDP Context Activation process complies with 3GPP TS23.060 9.2.

In an authentication process in the Attach process or the PDP Context Activation process, the terminal group information is acquired from an HLR (subscriber information database 80).

The bearer establishment request (4) corresponds to a process within the SGSN apparatus.

The bearer establishment request (5) corresponds to a PDP context creation request (Create PDP Context Request).

The bearer establishment response (6) corresponds to a PDP context creation response (Create PDP Context Response).

The bearer establishment response (7) corresponds to a process within the SGSN apparatus. Operations after the bearer establishment response (7) are operations that comply with a standard sequence. Thus, descriptions of the operations after the bearer establishment response (7) will be omitted.

In the E-UTRAN, the access process in Fig. 4 corresponds to an Attach process. The Attach process complies with 3GPP TS23.401 5.3.2.

In an authentication process in the Attach process, the terminal group information is acquired from an HSS.

The bearer establishment request (4) corresponds to a session creation request (Create Session Request) from the MME to the SGW.

The bearer establishment request (5) corresponds to a session creation request (Create Session Request) from the SGW to the PGW.

The bearer establishment response (6) corresponds to a session creation response (Create Session Response) from the PGW to the SGW.

The bearer establishment response (7) corresponds to a session creation response (Create Session Response) from the SGW to the MME. Operations after the bearer establishment response (7) are operations that comply with a standard sequence. Thus, description of the operations after the bearer establishment response (7) will be omitted.

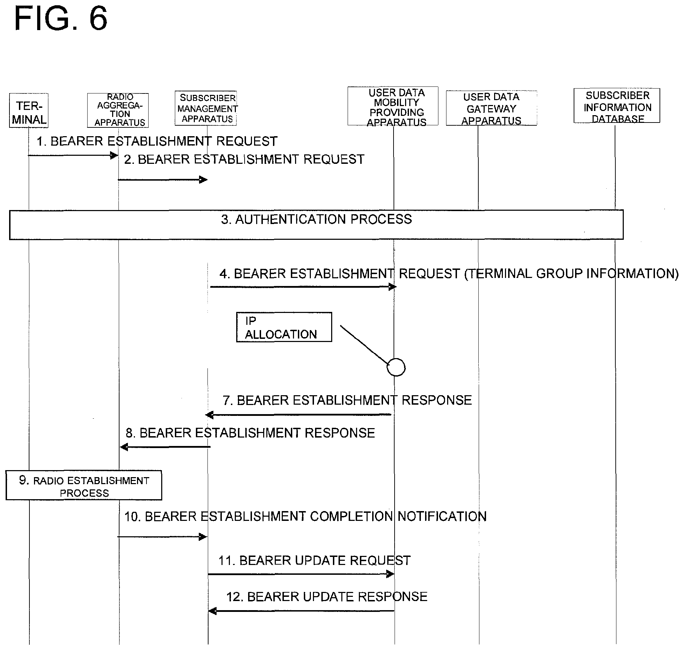

Next, an operation at a time of connection of a second or subsequent one of the terminals in the terminal group will be described with reference to a sequence diagram in Fig. 6.

The user data mobility providing apparatus 40, when receiving from the subscriber management apparatus 30 a bearer establishment request (4) to which the terminal group information has been added recognizes that the aggregated tunnel between the user data mobility providing apparatus 40 and the user data gateway apparatus 50 has been already established, from the terminal group information. Then, the user data mobility providing apparatus 40 executes dispensing an IP address for the second or subsequent one of the terminals 1 from the IP address band that has been already dispensed by the user data gateway apparatus 50 at the time of connection of the first one of the terminals in the terminal group (in Fig. 4).

In this case, the user data mobility providing apparatus 40 checks the number of the terminals to be held in the group. When the number of the terminals aggregated in one tunnel exceeds an upper limit, the user data mobility providing apparatus 40 establishes a new aggregated tunnel (aggregated bearer) with the user data gateway apparatus 50, as in the Attach process for the first one of the terminals described with reference to Fig. 4, for example.

Further, when the number of the terminals aggregated in one tunnel is within the number of the terminals to be held in the one group but exceeds an upper limit number of simultaneous uses of the aggregated bearer, the user data mobility providing apparatus 40 establishes a new aggregated bearer or reject connection.

With this arrangement, the number of simultaneous uses of the aggregated bearer is managed and controlled. Then, with the guaranteed bit rate (GRB) of a terminal using the aggregated tunnel guaranteed, a GBR share is implemented. Subsequent operations are the same as those at the time of connection of the first one of the terminals (in Fig. 4). Thus, description of the subsequent operations will be omitted.

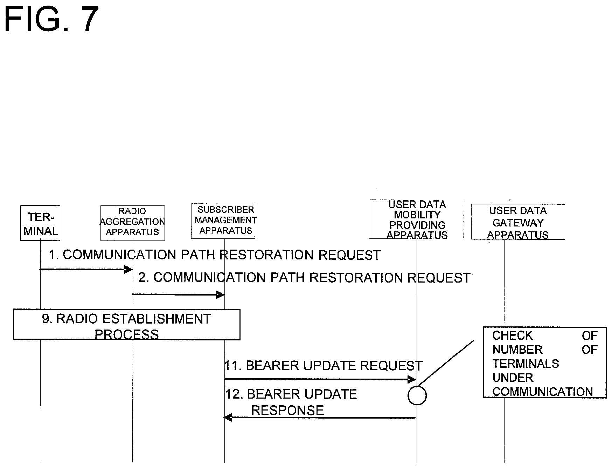

Next, a description will be directed to an operation when a terminal having a bearer allocation therefor already established and a communication path in a radio segment already released restores the communication path, with reference to a sequence diagram in Fig. 7.

The terminal 1 transmits a communication path restoration request (1) to the radio aggregating apparatus 20. Then, the radio aggregating apparatus 20 relays a communication path restoration request (2) to the subscriber management apparatus 30.

After a radio establishment process (9), the user data mobility providing apparatus 40, upon reception of a bearer update request (11) from the subscriber apparatus 30, checks the upper limit number of simultaneous uses of the aggregated bearer by the terminals to be held in the group. When the upper limit number of simultaneous uses of the aggregated bearer by the terminals to be held in the group is not exceeded, the user data mobility providing apparatus 40 returns a bearer update response to restore the communication path.

When the upper limit number of simultaneous uses of the aggregated bearer by the terminals to be held in the group is exceeded, the user data mobility providing apparatus 40 returns a bearer update response "NG" to the subscriber management apparatus 30 to reject the communication path restoration request. In this case, the user data mobility providing apparatus determines a value of a back-off timer (standby time) according to a utilization situation and a load situation of the aggregated bear, sets the value of the back-off timer in the bear update response, and then notifies the bearer update response to the terminal 1.

The terminal 1, upon reception of the bearer update response including the value of the back-off timer, waits for a period corresponding to the value of the back-off timer. Then, (after a value of the back-off time has become zero, for example), the terminal transmits a reconnection request. Thus, unnecessary contention of requests can be thereby avoided.

As described above, the following effects are achieved in this exemplary embodiment.

A first effect is as follows. Tunnels between the user data mobility providing apparatus 40 and the user data gateway apparatus 50 are aggregated among a plurality of terminals, and the number of simultaneous use of the aggregated tunnel by the terminals is managed and controlled. With this arrangement, guaranteed bands for respective terminals are aggregated and a band for use is guaranteed. Efficient band securing can be thereby performed.

A second effect is as follows. Tunnels between the user data mobility providing apparatus 40 and the user data gateway apparatus 50 are aggregated among the plurality of the terminals. A tunnel management resource for tunnel management in each apparatus can be thereby made efficient.

A third effect is as follows. In the procedure of connection of the second or subsequent one of terminals in a terminal group, the connection is completed just by coordination with the user data mobility providing apparatus 40 disposed in a network by which the terminal is served (IP address dispensing by the user data gateway apparatus 50 is not needed because the IP address dispensing is performed by the user data mobility providing apparatus 40). A setup time for the connection can be thereby reduced.

### <Second Exemplary Embodiment>

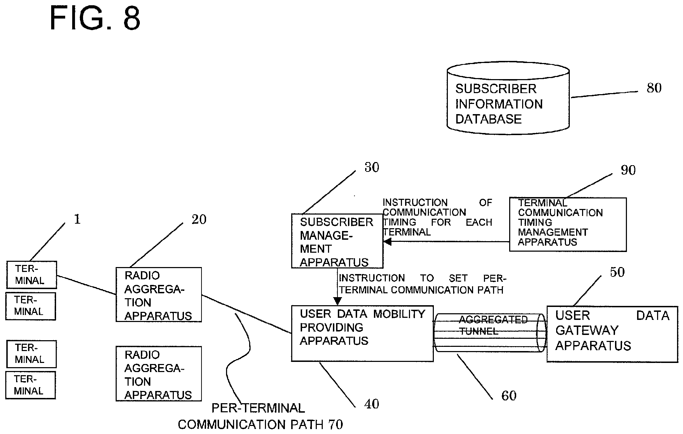

The following describes a second exemplary embodiment of the present invention. A basic configuration of the second exemplary embodiment is as described above. However, contrivance is applied to aggregated tunnel management by a user data mobility providing apparatus. Fig. 8 is a diagram illustrating an arrangement of the second exemplary embodiment.

Referring to Fig. 8, dispensing of an IP address for each terminal is performed by a subscriber management apparatus 30 rather than a user data mobility providing apparatus 40.

Further, in this exemplary embodiment, simultaneous communication by terminals in a terminal group is not permitted. The subscriber management apparatus 30 performs grouping of each terminal under control of a radio aggregating apparatus 20. Then, a timing of establishing a per-terminal communication path 70 is controlled. The need for being concerned with an IP address for each terminal by the user data mobility providing apparatus 40 is thereby eliminated.

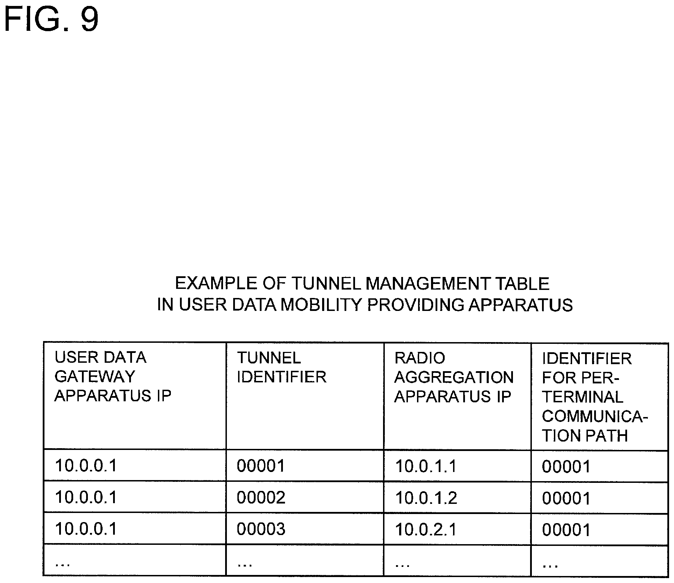

Fig. 9 is a table illustrating an example of a tunnel management table in the user data mobility providing apparatus 40. IPv4 is used for an IP address of the user data mobility providing apparatus 40.

One tunnel identifier is given to one aggregated tunnel 60, and one IP address for the radio aggregating apparatus 20 is given to one tunnel identifier. For a plurality of different tunnel identifiers such as 00001, 00002, and 00003, one per-terminal communication path 70 (with an identifier for the per-terminal communication path of 00001) between the user data mobility providing apparatus 40 and the radio aggregating apparatus 20 is treated as one per-terminal communication path. Since one per-terminal communication path 70 is used, simultaneous communication by a plurality of terminals in a same terminal group (a plurality of terminals under control of one radio aggregating apparatus 20) are not permitted. As described above, a terminal under control of the radio aggregating apparatuses 20 is grouped on a per terminal basis by the subscriber management apparatus 30.

The user data mobility management apparatus 40 is not aware of an IP address of a terminal. Thus, the need for management of an IP address of the terminal is eliminated. A plurality of terminals belonging to the same group can be thereby managed as one entry in the tunnel management table. A tunnel management resource can be thereby made efficient.

There is no switching using the bearer management function in an SGSN in a UTRAN and an SGW in an E-UTRAN. Influence on existing UTRAN and E-UTRAN systems can be thereby reduced.

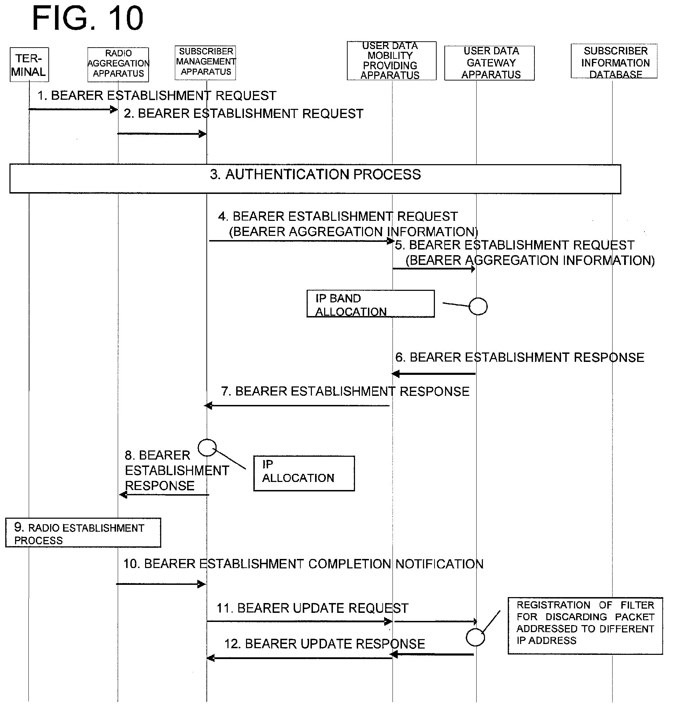

Next, an operation at a time of connection of a first one of the terminals in a terminal group in the configuration of the system in Fig. 8 will be described with reference to a sequence diagram shown in Fig. 10, as an operation at a time of tunnel establishment. Since operations up to an authentication process (3) are the same as those in Fig. 4, description of the operations up to the authentication process (3) is omitted.

The subscriber management apparatus 30, upon reception of terminal group information from a subscriber information database 80, determines about bearer aggregation based on the terminal group information. In this case, the subscriber management apparatus 30 confirms that a terminal for which the bearer establishment can be performed has not yet established the other bearer, from the terminal group identifier and the radio aggregating apparatus configured to accommodate the terminal. Then, the subscriber management apparatus 30 transmits a bearer establishment request (4) with bearer aggregation information set therein to the user data mobility providing apparatus 40.

The user data mobility providing apparatus 40 forwards the bearer establishment request (4) to a user data gateway apparatus 50. Since the process of the user data gateway apparatus 50 is the same as that in Fig. 4, description of the process is omitted.

The user data mobility providing apparatus 40, upon reception of a bearer establishment response (6), associates an aggregated tunnel 60 and the per-terminal communication path 70. The aggregated tunnel 60 is provided between the user data mobility providing apparatus 40 and the user data gateway apparatus 50. The per-terminal communication path 70 is provided between the user data mobility providing apparatus 40 and the radio aggregating apparatus 20.

The subscriber management apparatus 30, upon reception of a bearer establishment response (7), dispenses an IP address for each terminal based on an IP address band dispensed by the user data gateway apparatus 50, and sets the IP address of the terminal in a bearer establishment response (8).

Then, the subscriber management apparatus 30, upon reception of a bearer establishment completion notification (10), transmits a bearer update request (11).

At this point, the subscriber management apparatus 30 can add to the bearer update request (11) a registration request for setting a filter discarding an IP packet having a destination address other than the IP address dispensed for the terminal, and can request the user data gateway apparatus 50 to register the discarding filter for the discard.

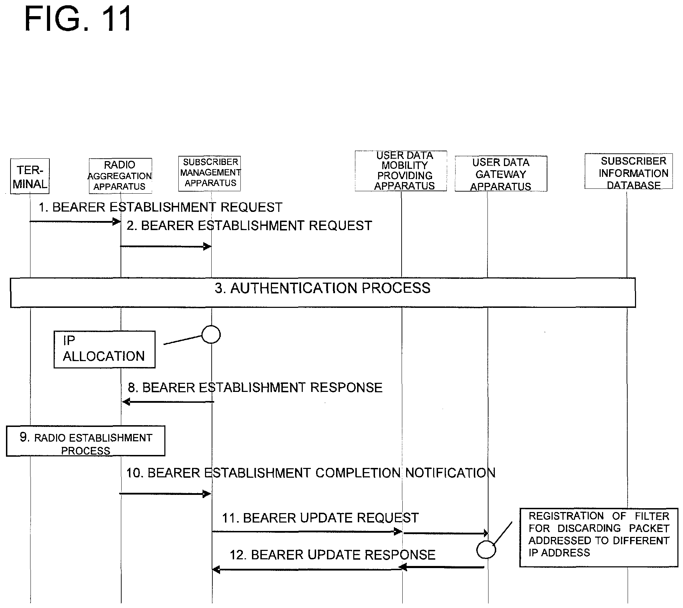

Next, an operation at a time of connection of a second or subsequent one of the terminals in the terminal group in Fig. 8 will be described, with reference to a sequence diagram in Fig. 11.

The subscriber management apparatus 30 which has determined the bearer aggregation after an authentication process (3) confirms that another terminal for which the bearer aggregation is possible has already established a bearer. Then, the subscriber management apparatus 30 executes dispensing of an IP address for each terminal from the IP address band already dispensed by the user data gateway apparatus 50.

When the another terminal for which the bearer aggregation is possible is executing communication and the per-terminal communication path has been already established in this case, the subscriber management apparatus 30 determines whether or not the per-terminal communication path that has been already established is to be released or a new bearer establishment request from the terminal is to be rejected.

When the subscriber management apparatus 30 rejects the new bearer establishment request from the terminal, the subscriber management apparatus 30 may set additionally a retry waiting timer for the terminal in a signal indicating rejection of the bearer establishment request to specify a timing of retransmitting the bearer establishment request for the terminal 1. Since subsequent operations are the same as those in Fig. 10, description of the subsequent operations is omitted.

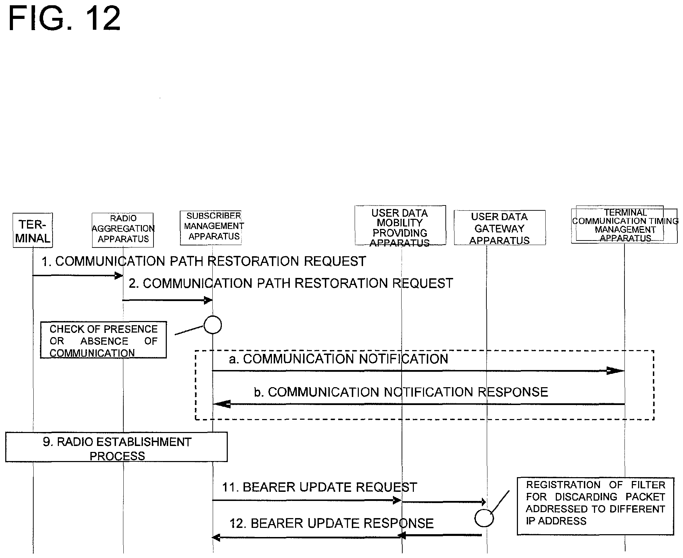

Next, a description will be directed to an operation when the per-terminal communication path in Fig. 8 is restored for communication from a state where the per-terminal communication path has already been released and no communication is performed, with reference to a sequence diagram in Fig. 12.

The subscriber management apparatus 30, upon reception of a communication path restoration request (2), executes checking for determining whether or not another terminal set to use the same aggregated tunnel is using the per-terminal communication path.

When another terminal has already used the per-terminal communication path, the subscriber management apparatus 30 disconnects the another terminal or rejects a new request from the another terminal.

In this case, the subscriber management apparatus 30 may make an inquiry to a terminal communication timing management apparatus 90 (by a communication notification (a) in Fig. 12), and may determine whether or not the new request from the another terminal can be received, based on a result of the inquiry (by a communication notification response (b) from the terminal communication timing management apparatus 90).

The procedure for restoring the per-terminal communication path in Fig. 12 corresponds to the procedure in 3GPP TS23.060 6.12 in the UTRAN, or the procedure in 3GPP TS23.401 5.3.4 in the E-UTRAN (for details of each of the procedures, refer to the description in the corresponding section in each document).

### <Third Exemplary Embodiment>

A description will be given about an example where a timing of restoring a communication path is controlled from a network side in the above-mentioned configuration, as another exemplary embodiment. A system arrangement in this exemplary embodiment is the same as that in Fig. 8.

The following respects can be pointed out as effects of this exemplary embodiment:
- A timing of establishing a communication path for a terminal can be instructed from an external network; and
- A same address is used for IP addresses to be allocated to terminals, thereby enabling suppression of IP address usage.

An operation at a time of establishing a tunnel and an operation at a time of connection of a second or subsequent one of the terminals in this exemplary embodiment are the same as those in Figs. 10 and 11. However, this exemplary embodiment is different from the second exemplary embodiment in the following respect. That is, when the same address is used for the IP addresses to be allocated to the terminals, a user data gateway apparatus 50 dispenses an IP address rather than an IP address band. Dispensing an IP address by A subscriber management apparatus 30 is not performed, and the IP address dispensed by the user data gateway apparatus 50 is notified to the terminal 1 without alteration.

That is, the user data gateway apparatus 50 and the user data mobility providing apparatus 40 execute operations compliant with the standard. The subscriber management apparatus 30 controls a communication timing of each terminal using a common aggregated tunnel to thereby implement tunnel aggregation.

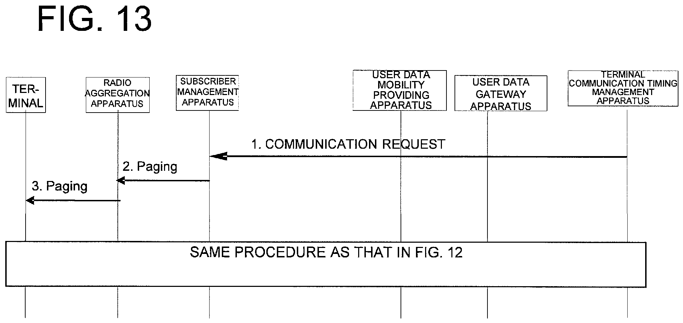

Next, an operation of controlling a timing of restoring a communication path from the network side in the configuration in Fig. 8 will be described with reference to a sequence diagram in Fig. 13.

A communication timing management apparatus 90 in Fig. 8 transmits to the subscriber management apparatus 30 a communication request (1) with an identifier for the terminal 1 that desires to restore a communication path set therein.

The subscriber management apparatus 30, upon reception of the communication request (1), performs Paging to a radio aggregating apparatus 20 to instruct restoration of the communication path for the terminal 1.

At this point, the subscriber management apparatus 30 checks whether or not another terminal 1 utilizing the same aggregated tunnel is using the per-terminal communication path 70. When the corresponding another terminal 1 exists, the subscriber management apparatus 30 determines whether or not disconnection of the another terminal 1 is to be executed or the request from a terminal communication timing management apparatus 90 is to be rejected. Since the subsequent procedure of restoring the communication path is the same as that in Fig. 12, description of the subsequent procedure is omitted.

The above-mentioned Paging process corresponds to 3GPP TS 23.060 6.12.2 in a UTRAN or 3GPP TS 23.401 5.3.4.3 in an E-TRAN. However, a trigger of execution of Paging in the subscriber management apparatus 30 is not the reception of downlink data but the communication request (1), which is different from 3GPP TS 23.060 6.12.2 or 3GPP TS 23.401 5.3.4.3.

### <Fourth Exemplary Embodiment>

The following describes as an fourth exemplary embodiment of the present invention an example where a terminal has moved to a location under control of a radio aggregating apparatus not connected to a user data mobility providing apparatus 40 in the configuration shown in Fig. 1.

Movement of a terminal toward the radio aggregating apparatus 20 not connected to the user data mobility providing apparatus 40 is not supported in each of the above-mentioned exemplary embodiments. In this exemplary embodiment, however, it is so arranged that, even when the terminal moves to a location under control of the radio aggregating apparatus not connected to the user data mobility providing apparatus 40, an IP address dispensed to the terminal can be continued to be used.

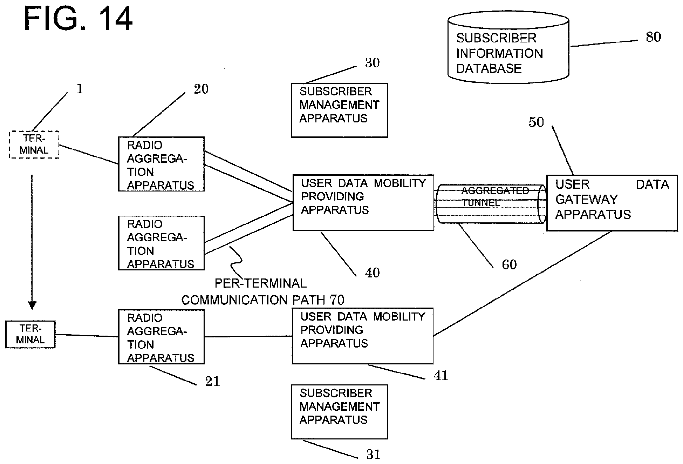

Fig. 14 is a diagram for explaining an arrangement of the fourth exemplary embodiment. A subscriber management apparatus 31, a user data mobility providing apparatus 41, and a radio aggregating apparatus 21 connected to the user data mobility providing apparatus 41 are added to the configuration in Fig. 1.

In this exemplary embodiment, when a terminal 1 moves from a location under control of a radio aggregating apparatus 20 to a location under control of the radio aggregating apparatus 21, a user data gateway apparatus 50 switches connection from an aggregated tunnel 60 for a user data mobility providing apparatus 40 to a path for the user data mobility providing apparatus 41, thereby implementing support of movement of the terminal 1 toward the radio aggregating apparatus 21 not connected to the user data mobility providing apparatus 40.

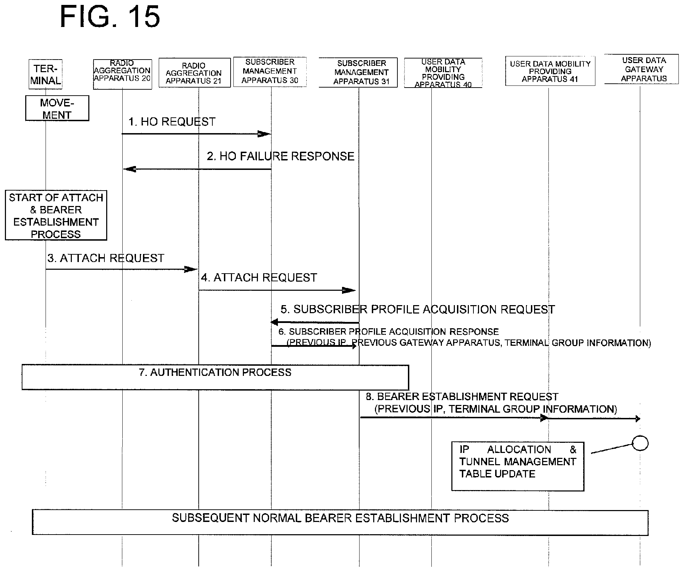

Next, a switching process caused by the movement of the terminal 1 will be described, with reference to a sequence diagram in Fig. 15.

The radio aggregating apparatus 20 starts a handover (HO) process with a movement of the terminal 1 as a trigger (a HO request (1)).

Since bearer aggregation for the terminal 1 has been performed, the subscriber management apparatus 30 determines that handover (HO) process cannot be performed, and returns an HO failure response. This HO process is compliant with a standard operation. Thus, a detailed description of the HO process is omitted. In a UTRAN, this HO process corresponds to 3GPP TS 23.060 6.9.2.2.2. In an E-UTRAN, this HO process corresponds to 3GPP TS 23.401 5.5.1.2.

The terminal for which handover (HO) has failed starts an Attach and bearer reestablishment process.

The subscriber management apparatus 31, upon reception of an Attach request (4) transmits a subscriber profile acquisition request (5) to the subscriber management apparatus 30 by which the terminal 1 is previously served.

The subscriber management apparatus 30 sends a response (6) indicating the IP address used when the terminal 1 was connected before the handover and the user data gateway apparatus 50 and terminal group information.

The subscriber management apparatus 31 starts a bearer establishment process after an authentication process, and transmits to the user data mobility providing apparatus 41 a bearer establishment request (8) with the previous IP address and the terminal group information set therein.

The user data mobility providing apparatus 41 transmits a request to the user data gateway apparatus 50. The user data gateway apparatus 50, upon reception of the request, confirms that the IP address specified is included in an IP address band associated with the aggregated tunnel 60 that is identified from the specified terminal group information, and newly executes setting of a bearer for the user data mobility providing apparatus 41.

Since subsequent operations are the same as those in a normal Attach/bearer establishment process, description of the subsequent operations is omitted.

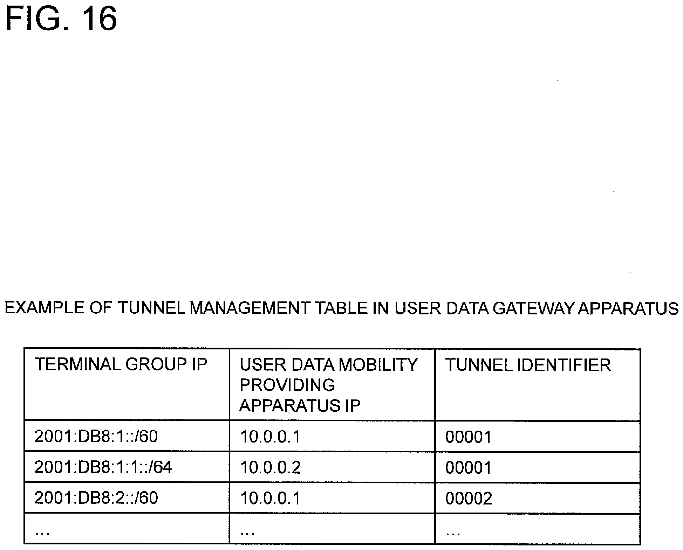

An example of a tunnel management table that is a result obtained by newly carrying out bearer setting by the user data gateway apparatus 41 is illustrated in Fig. 16. Fig. 16 illustrates an example where an IP address dispensed to a target terminal is 2001:DB8:1:1:/64.

The user data gateway apparatus 50 matches a terminal group IP with an IP address for a forwarded packet by longest match (method in which a terminal group IP with a longest address portion that matches with that of an IP address of the forwarded packet is adopted). Only a part of an address out of an IP address band allocated to the aggregated tunnel can be forwarded to a tunnel for another user data mobility providing apparatus (41).

### <Fifth Exemplary Embodiment>

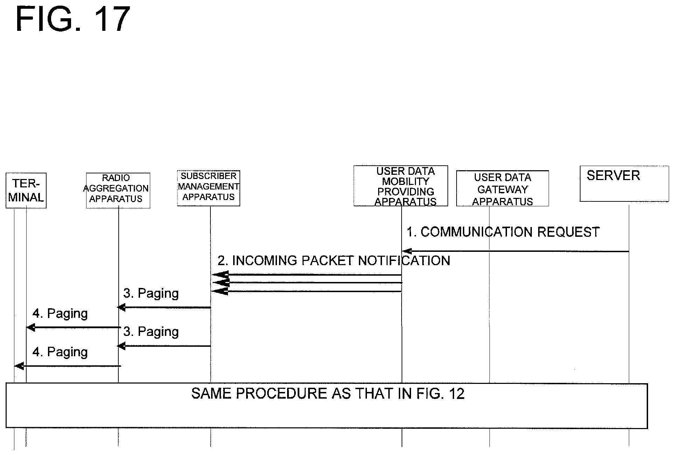

In a fifth exemplary embodiment of the present invention, a description is given about an example where terminals in a same group are simultaneously called in the configuration shown in Fig. 1, with reference to a sequence diagram in Fig. 17.

When it is necessary to call a terminal in a related art, it is necessary to:
transmit an IP packet with a destination for each terminal set therein; or
transmit an SMS (Short Message Service) for each terminal.

In this exemplary embodiment, all terminals in a same terminal group can be called by one packet for the terminal group.

In this case, a server (external network server) uses a group ID for calling all the terminals in the terminal group. A description will be given about a case where an IP address allocated to the terminal group is used, as the group ID.

When the server (external network server) calls the terminals in the group by a communication request (1), the server transmits an IP packet with an IP address (such as 2001:DB8:1:: in Fig. 2) subject to delegation (IP delegation) and allocated to the group set as a destination. The IP packet passes through an aggregated tunnel 60 for a user data gateway apparatus 50 and reaches a user data mobility providing apparatus 40.

The user data mobility providing apparatus 40, on reception of the IP packet, determines that the IP packet is a packet for calling all the terminals in the same group, because the destination of the packet is the IP address subject to the delegation, generates, for each terminal, an incoming packet notification (2) addressed to each terminal in the group, and transmits incoming packet notifications (2) to a subscriber management apparatus 30. The subscriber management apparatus 30, on reception of the incoming packet notifications makes paging requests (3, 4) to the terminals specified. Since subsequent operations comply with standard operations that have been prescribed, description of the subsequent procedure is omitted.

In the above-mentioned example, the user data mobility providing apparatus 40 generates the incoming packet notification for each terminal. The user data mobility providing apparatus 40, however, may once transmit an incoming packet notification for the group to the subscriber management apparatus 30, and the subscriber management apparatus 30 may make a paging (Paging) request to each of the terminals in the group that has been specified.

The description was given in the case where the exemplary embodiments were applied to the UTRAN and the E-UTRAN. The exemplary embodiment can be applied to a different mobile network such as a WiMAX. The following description will be given in connection with examples.

### <First Example>

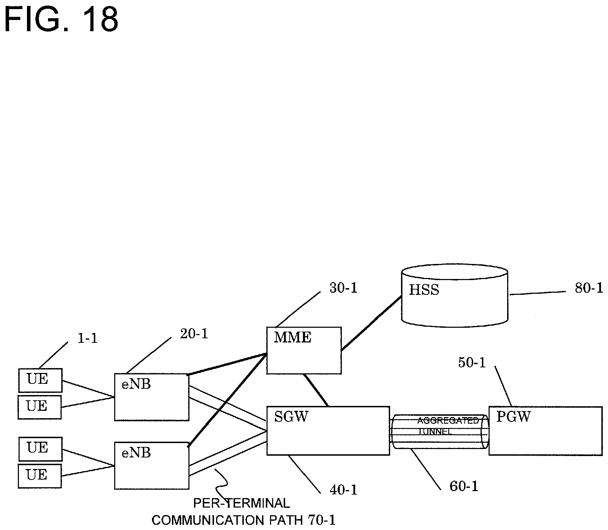

Fig. 18 is a diagram illustrating an arrangement corresponding to that in an E-UTRAN. UEs 1-1, eNodeBs (eNBs) 20-1, an MME 30-1, an SGW 40-1, a PGW 50-1, and an HSS 80-1 in Fig. 18 respectively correspond to the terminals 1, the radio aggregating apparatuses 20, the subscriber management apparatus 30, the user data mobility providing apparatus 40, the user data gateway apparatus 50, and the subscriber information database 80 in Fig. 1. The MME 30-1 is connected to the eNBs 20-1 and the SGW 40-1. As a tunnel between the SWG 40-1 and the PGW 50-1, an aggregated tunnel 60-1 is extended for a plurality of the UEs 1-1, as in the first exemplary embodiment. Using an interface S1-MM3, the MME 30-1 accommodates each eNB 20-1, and performs movement management, authentication (for security), and setting of a user forwarding route of each UE1-1. Subscriber data, authentication data, and the like for authenticating and permitting a user access to an EPC are forwarded via an interface (S6a) between the MME 30-1 and the HSS 80-1. The SGW 40-1 and the PGW 50-1 are connected via a tunnel interface (S5).

Further, the MME 30-1 is connected to the SGW 40-1 via an interface (S11). The MME 30-1 performs control signal transmission and reception with the eNB 20-1 via the interface S1-MME, and performs control signal transmission and reception with the SGW 40-1 via the S11 interface. The MME 30-1 performs setting and releasing of the user data forwarding path in a segment (per-terminal communication path) connected from the SGW 40-1 to each eNB via an S1-U interface, and the like.

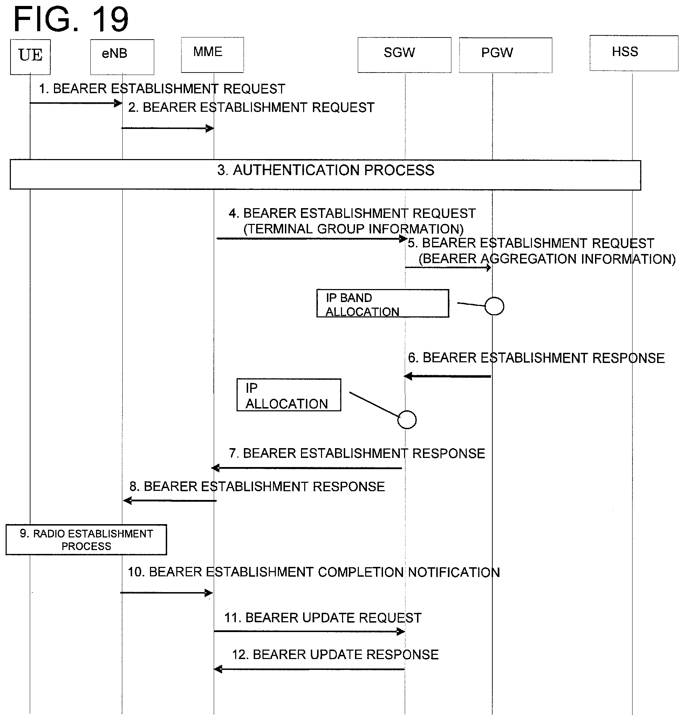

Fig. 19 is a diagram illustrating a sequence when bearer establishment is performed in the E-UTRAN. Fig. 19 corresponding to a diagram where the terminal 1, the radio aggregating apparatus 20, the subscriber management apparatus 30, the user data mobility providing apparatus 40, the user data gateway apparatus 50, and the subscriber information database 80 are respectively set to the UE, the eNB, the MME, the SGW, the PGW, and the HSS. Since the sequence is the same as that in Fig. 2, description of the sequence is omitted.

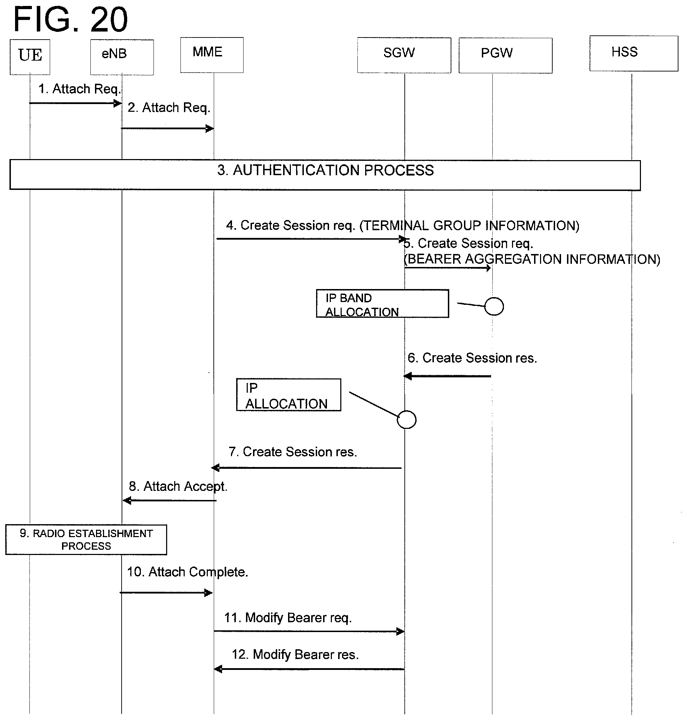

Fig. 20 is a diagram illustrating the sequence when the bearer establishment is performed in the E-UTRAN. Referring to Fig. 19, a specific example of each of requests and responses in Fig. 19 is shown.

Referring to Fig. 20,
- ATTACH REQUESTS (1, 2) correspond to bearer establishment requests (1, 2) in Fig. 19,
- A create Session Request (terminal group information) (4) corresponds to a bearer establishment request (4) in Fig. 19,
- A create Session Request (terminal bearer aggregation information) (5) corresponds to a bearer establishment request (5) in Fig. 19,
- Create Session Responses (6, 7) respectively correspond to bearer establishment responses (6, 7) in Fig. 19
- An ATTACH RESPONSE (ACCEPT) (8) corresponds to a bearer establishment response (8) in Fig. 19,
- An Attach Complete (10) corresponds to a bearer establishment completion notification (10) in Fig. 19, and a Modify·Bearer Request (11) corresponds to a bearer update request (11) in Fig. 19, and
- A Modify Bearer Response (12) corresponds to a bearer update completion (12) in Fig. 19.

The PGW, upon reception of the Create Session Request (terminal bearer aggregation information) (5), performs IP address band allocation. The SGW, upon reception of the Create Session Response (6), performs IP address dispensing.

The case where signals exchanged between the SGW and the PGW comply with a GTP is described with reference to Fig. 20. The first example can be similarly applied also in the case where a PMIP is used.

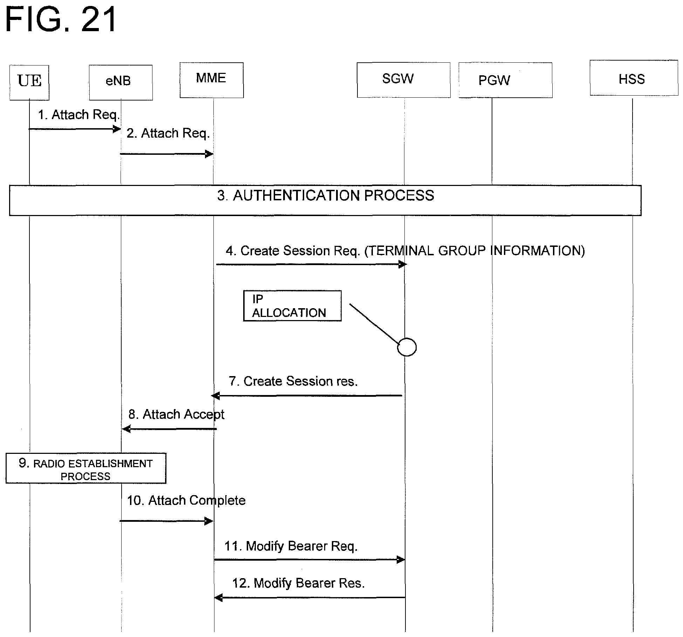

Fig. 21 is a diagram illustrating a sequence when bearer establishment is performed for a second or a subsequent one of the terminals in the same group in the E-UTRAN after the aggregated tunnel has been set between the PGW and the SGW in accordance with Fig. 19. Fig. 21 corresponds to Fig. 6.

The SGW, on reception of a Create Session Request (terminal group information) (4), recognizes that the aggregated tunnel between the SGW and the PGW has already been established based on the terminal group information, and executes IP address dispensing for the terminal 1 from an IP address band dispensed from the PGW when the first one of the terminals in the terminal group was connected. The SGW in this case checks the number of the terminals to be held in the group. When the number of the terminals to be aggregated into one tunnel exceeds an upper limit, the SGW establishes a new aggregated tunnel (aggregated bearer) with the PGW according to the process for the first one of the terminals, for example.

When the number of the terminals to be aggregated into the one tunnel is within the number of the terminals to be held in the group but exceeds an upper limit number of simultaneous uses, the SWG establishes a new aggregated bearer or rejects connection. With this arrangement, the number of simultaneous uses of the aggregated bearer is managed and controlled. Then, the guaranteed bit rate (GBR) of the terminal that will use the tunnel is guaranteed, and a GBR share is implemented. Subsequent operations are the same as those at the time of connection of the first one of the terminals (in Fig. 19). Thus, description of the subsequent operations is omitted.

### <Second Example>

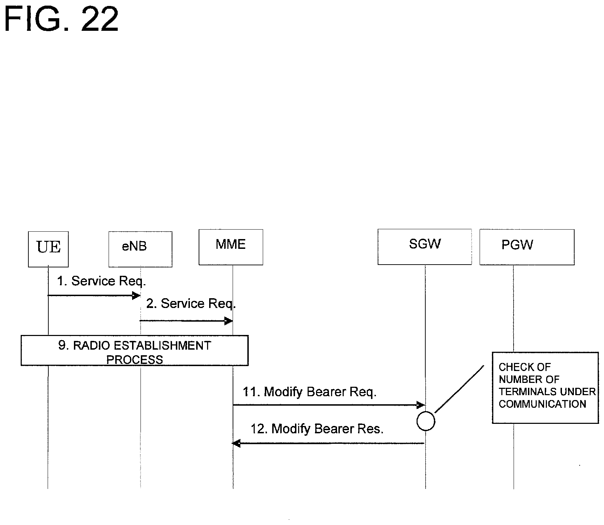

Fig. 22 corresponds to Fig. 7, and shows an operation sequence when an interface S1 is restored in an E-UTRAN. Operations will be described, with reference to Figs. 22 and 18. A Service Request corresponds to the request for restoring the communication path in Fig. 7.

The UE 1-1 in Fig. 18 transmits a Service Request (1) to the eNB 20-1. The eNB 20-1, upon reception of the Service Request (1), transmits a Service Request (2) to the MME 30-1. The SGW 40-1, upon reception of a Modify Bearer Request (11) from the MME 30-1 after a radio establishment process (9), checks the number of the terminals under communication to check the upper limit number of simultaneous uses of an aggregated bearer by the terminals to be held in the group. Then, when the number of the terminals under communication is within the upper limit number of simultaneous uses of the aggregated bearer by the terminals to be held in the group, the SGW returns a Modify Response (12) to restore the communication path.

When the number of the terminals under communication exceeds the upper limit number of simultaneous uses of the aggregated bearer, the SGW 40-1 returns an NG for the Modify Bearer Response (12) to the MME 30-1 to reject the request for restoring the communication path. At this point, the SGW 40-1 determines the value of a back-off timer (back-off timer) according to the use status and the load status of the aggregated bearer, and sets the value in the Modify Bearer Response (12). Then, the SGW notifies the Modify Bearer Response (12) to the UE 1-1. The UE 1-1, upon reception of the Modify Bearer Response (12) including the value of the back-off timer (back-off timer), waits for a period corresponding to the value of the back-off timer (back-off timer), and then transmits a reconnection request. Unnecessary contention of requests can be thereby avoided.

### <Third Example>

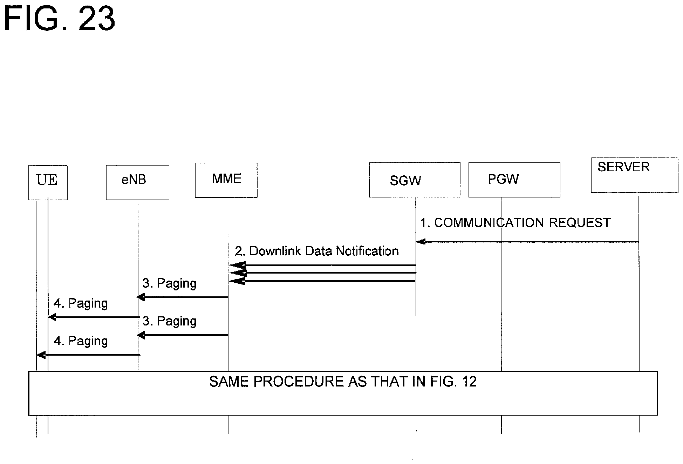

Fig. 23 corresponds to Fig. 17, and is a diagram illustrating a sequence for simultaneously calling terminals in a same group in an E-UTRAN. Operations will be described, with reference to Figs. 23 and 18.

Referring to Fig. 23, when a server (connected to an external packet data network) calls UEs in a group, by a communication request (1), the sever transmits an IP packet with an IP address (such as 2001:DB8:1:: in Fig. 2) subject to delegation (IP delegation) and allocated to the group set as a destination. The IP packet passes through the aggregated tunnel 60-1 for the PGW 50-1 in Fig. 18 and reaches the SGW 40-1.

The SGW 40-1, upon reception of the IP packet, determines that the IP packet is a packet for calling all the UEs in the same group because the destination of the packet is the IP address subject to the delegation (delegation), generates for each UE a Downlink Data Notification (2) addressed to each UE in the group, and transmits the Downlink Data Notification (2) to the MME 30-1. The MME 30-1, upon reception of the incoming packet notification, makes Paging requests (3, 4) to the terminals specified. Since subsequent operations comply with standard operations that have been prescribed, description of the subsequent operations is omitted.

In the above-mentioned example, the SGW 40-1 generates the Downlink Data Notification (2) for each UE. However, the SGW 40-1 may once transmit to the MME 30-1 an incoming packet notification for the group, and the MME 30-1 may make a Paging request to each of the terminals in the specified group.

### <Fourth Example>

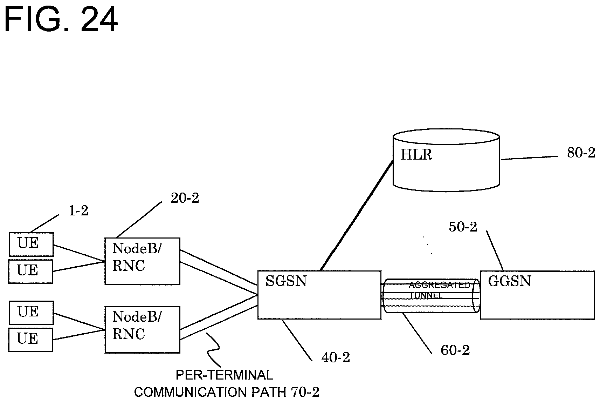

Fig. 24 is a diagram illustrating an arrangement corresponding to that in Fig. 1 in a UTRAN. In the UTRAN, UEs 1-2 (or MSs), NodeB/RNCs 20-2, an SGSN 40-2, a GGSN 50-2, and an HLR 80-2 respectively correspond to the terminals 1, the radio aggregating apparatuses 20, the subscriber management apparatus 30 plus the user data mobility providing apparatus 40, the user data gateway apparatus 50, and the subscriber information database 80. Referring to Fig. 24, just for simplification of the drawing, the NodeB/RNC is collectively designated by reference numeral 20-2. When each node is individually referred to, a designation such as an RNC 20-2 is used.

Referring to Fig. 24, the UEs 1-2 are wirelessly connected to the NodeBs 20-2 as base station apparatuses. The SGSN 40-2 has a combined function of the subscriber management apparatus 30 and the user data mobility providing apparatus 40 in Fig. 1, for example, and is connected to the RNCs 20-2, the HLR 80-2, and the GGSN 50-2. As a tunnel between the SGSN 40-2 and the GGSN 50-2, an aggregated tunnel 60-2 is extended for a plurality of the UEs 1-2, as in the first exemplary embodiment.

The SGSN 40-2 is connected to the HLR 80-2 via a Gr interface, is connected to the GGSN 50-2 via a Gp interface, and is connected to each RNC 20-2 via an Iu interface.

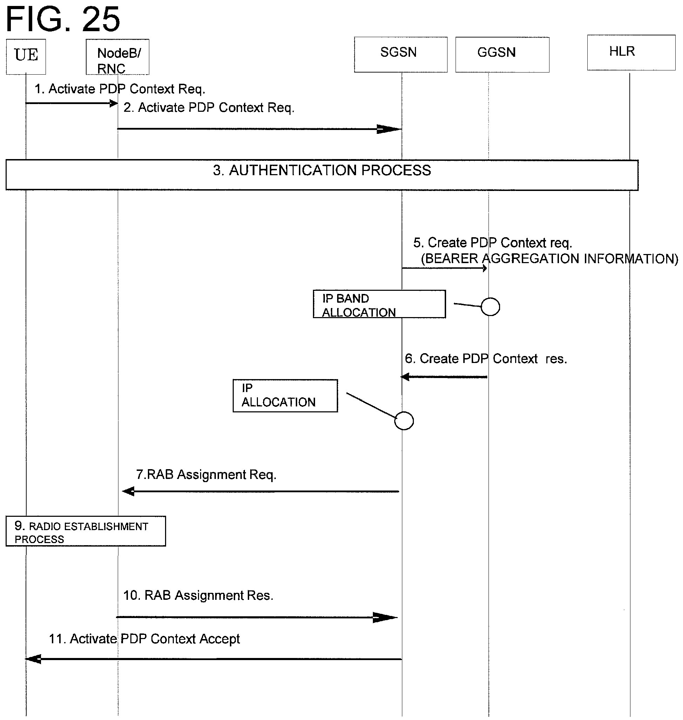

Fig. 25 is a diagram illustrating a sequence when bearer establishment is performed in the UTRAN. Referring to Fig. 25,
- Activate PDP Context Requests (1, 2) respectively correspond to the bearer establishment requests (1, 2) in Fig. 4,
- A Create PDP Context Request (bearer aggregation information) (5) corresponds to the bearer establishment request (bearer aggregation information) in Fig. 4,
- A Create PDP Context Request (6) corresponds to the bearer establishment response (6) in Fig. 4,
- A RAB Assignment Request (7) corresponds to the bearer establishment response (7) in Fig. 4,
- A RAB Assignment Response (10) corresponds to the bearer establishment completion notification (10) in Fig. 4,
- An activate PDP Context Accept (11) is a response to the Activate PDP Context Request (1).

Since operations in the sequence in Fig. 25 are the same as those in Fig. 4, description of the operations is omitted. A PDP Context Activation Process in the UTRAN is performed in accordance with 3GPP TS 23.060 9.2.

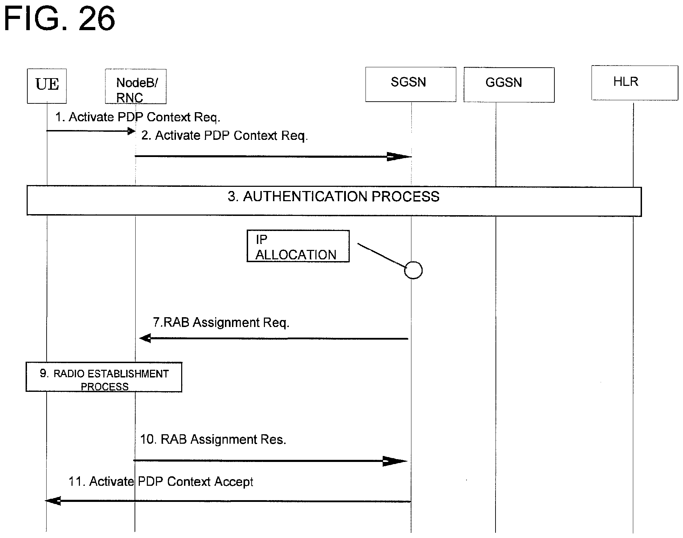

Fig. 26 is a diagram illustrating a sequence when bearer establishment is performed for a second or subsequent one of the terminals in the same group in the UTRAN after setting of the aggregated tunnel between the GGNS and the SGSN in accordance with Fig. 25. Operations will be described with reference to Figs. 26 and 24.

After an Activate PDP Context Request (2) has been transmitted from the RNC 20-2 to the SGSN 40-2 in Fig. 4, an authentication process (3) is performed. The SGSN 40-2 recognizes from terminal group information that the aggregated tunnel between the SGSN and the GGSN has already been established, and then performs an IP address dispensing for the terminal 1 from an IP address band already dispensed from the GGSN 50-2 when the first one of the terminals in the terminal group was connected. In this case, the SGSN 40-2 checks the number of the terminals to be held in the group. When the number of the terminals to be aggregated into one tunnel exceeds an upper limit, the SGSN 40-2 establishes a new aggregated tunnel (aggregated bearer) with the GGSN 50-2 according to the process for the first one of the terminals.

When the number of the terminals aggregated into the one tunnel is within the number of the terminals held in the group but exceeds the upper limit number of simultaneous uses of the aggregated bearer, the SGSN 40-2 establishes a new aggregated bearer or rejects connection. With this arrangement, the number of simultaneous uses of the aggregated bearer is managed and controlled. Then, after the GBR of the terminal that will use the tunnel has been guaranteed, a GBR share is implemented. Subsequent operations are the same as those at the time of connection of the first one of the terminals (in Fig. 25). Thus, description of the subsequent operations is omitted.

### <Fifth Example>

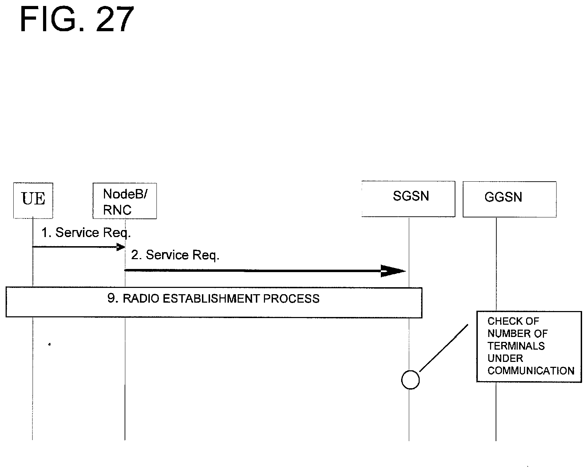

Fig. 27 corresponds to Fig. 7, and shows an operation sequence when a lu interface is restored in a UTRAN. Operations will be described, with reference to Figs. 27 and 24.

The UE 1-2 in Fig. 24 transmits a Service Request (1) to the RNC 20-2. The RNC 20-2, upon reception of the Service Request (1), transmits a Service Request (2) to the SGSN 40-2. After a radio establishment process (9), the SGSN 40-2 checks the number of terminals under communication. The SGSN 40-2 checks the upper limit number of simultaneous uses of the aggregated bearer by the terminals held in the group. When the number of terminals under communication is within the upper limit number of simultaneous uses of the aggregated bearer, the SGSN 40-2 returns a response to restore the communication path. When the number of terminals under communication exceeds the upper limit number of simultaneous uses of the aggregated bearer, the SGSN 40-2 rejects a request for restoring the communication path. In this case, the SGSN 40-2 determines the value of a back-off timer (back-off timer) according to the use status and the load status of the aggregated bearer, sets the value of the back-off time in the rejection for restoring the communication path, and then notifies the rejection to the UE 1.

### <Sixth Example>

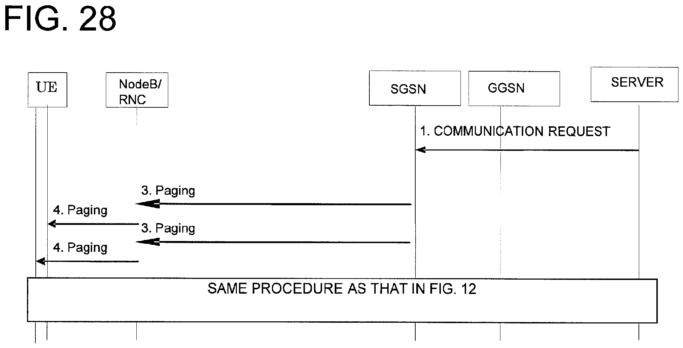

Fig. 28 corresponds to Fig. 17, and is a diagram illustrating a sequence for simultaneously calling terminals in a same group in a UTRAN. The following describes operations with reference to Figs. 27 and 24.

When a server (in an external packet data network: the GGSN 50-2 in Fig. 24 is an end point of the external packet data network) calls the UEs 1-2 in the group by a communication request (1), the server transmits an IP packet with an IP address (such as 2001:DB8:1:: in Fig. 2) allocated to the group and subject to delegation (IP delegation) set as a destination. The IP packet passes through the aggregated tunnel 60-2 for the GGSN 50-2 and reaches the SGSN 40-2. The SGSN 40-2, upon reception of the IP packet, determines that the IP packet is a packet for calling all the UEs in the same group because the destination of the IP packet is the IP address subject to the delegation (delegation). Then, the SGSN 40-2 makes Paging requests (3, 4) to the UEs. Subsequent operations after this operation are in accordance with standard operations that have been prescribed. Thus, description of the subsequent operations is omitted.

In the above-mentioned exemplary embodiments and examples, setting of the group of the terminals associated together with the common aggregated tunnel (association between the aggregated tunnel and subscribers) may be arbitrarily performed according to the business model or the strategy of a communication common carrier (carrier), for example. The group of the terminals may be aggregated in the form of an aggregated tunnel that is different according to the contract status of each terminal (subscriber), for example. An aggregated tunnel with a wide band may be secured for a subscriber who has established a premium contract or the like, in contrast with a subscriber who has established a normal contract. Alternatively, an aggregated tunnel for simultaneous distributions (for example, MBMS) may be set up. Alternatively, when the terminals are MTM apparatuses or the like, separate aggregated tunnels may be provided for respective business operators that manage and operate the apparatuses (when the MTC apparatuses are vending machines, for example, a plurality of the vending machines is aggregated in the form of an aggregated tunnel that is different according to each vending machine business operator (such as a beverage manufacturer, a soft drink manufacturer, or a vending machine manufacturer). As another arrangement, a dedicated aggregated tunnel may be provided for moving picture communication (that needs a wide band), or an aggregated tunnel for an on-line game may be set up. Alternatively, a plurality of aggregated tunnels may be divided for each communication common carriers.

The above-mentioned exemplary embodiments, the above-mentioned exemplary embodiments are described in the following supplementary notes, though not limited thereto.

### (Supplementary Note 1)

A communication system where a mobile communication system's core network comprises:
a user data gateway apparatus connected to an external network; and
a user data mobility providing apparatus configured to perform data transfer between the user data gateway apparatus and a radio aggregating apparatus, thereby providing a mobility function extending across the radio aggregating apparatus; wherein
when setting a tunnel between the user data gateway apparatus and the user data mobility providing apparatus based on a request from a terminal, an aggregated tunnel into which tunnels associated with a terminal group of a plurality of terminals including the terminal are aggregated is set, based on subscriber information of the terminal.

### (Supplementary Note 2)

The communication system according to Supplementary Note 1, wherein
the user data gateway apparatus initially aggregates addresses for the terminal group of the plurality of terminals being able to be accommodated in the same tunnel between the user data gateway apparatus and the user data mobility providing apparatus to be allocated as an address band; and
the user data gateway apparatus sets the one aggregated tunnel provided in common to the terminal group of the plurality of terminals and forwards to the aggregated tunnel a packet addressed to each of the plurality of terminals.

### (Supplementary Note 3)

The communication system according to Supplementary Note 1, wherein
the user data mobility providing apparatus dispenses an address for each terminal, from the address band for the terminal group dispensed by the user data gateway apparatus; and
the user data mobility providing apparatus determines to which terminal a packet forwarded to the user data mobility providing apparatus through the aggregated tunnel is addressed, and then forwards the packet to the radio aggregating apparatus.

### (Supplementary Note 4)

The communication system according to Supplementary Note 1, wherein
band guaranteed is performed for the aggregated tunnel provided in common to the terminal group.

### (Supplementary Note 5)

The communication system according to Supplementary Note 1, wherein
when one of the terminals for which bearer establishment has been already performed and for which a communication path in a radio segment has been already released restores the communication path in the radio segment, the terminal transmits a communication path restoration request to a subscriber management apparatus;
the user data mobility providing apparatus, upon reception of a bearer update request from the subscriber management apparatus, checks the upper limit number of simultaneous uses of the bearer by the terminals to be held in the terminal group, and returns a bearer update response when the number of the terminals under communication is within the upper limit number of simultaneous uses, thereby restoring the communication path, and
when the number of the terminals under communication exceeds the upper limit number of simultaneous uses, the user data mobility providing apparatus rejects the communication path restoration request, determines the value of a back-off timer according to the use status and the load status of the aggregated tunnel, sets the value of the back-off timer, and then notifies the bearer update response.

### (Supplementary Note 6)

The communication system according to Supplementary Note 1, wherein
a subscriber management apparatus in the core network dispenses an address for each terminal from the address band for the terminal group dispensed by the user data gateway apparatus;
the subscriber management apparatus does not permit simultaneous communications by a plurality of the terminals in the terminal group; and
the subscriber management apparatus performs terminal grouping for each terminal under control of the radio aggregating apparatus.

### (Supplementary Note 7)

The communication system according to Supplementary Note 6, wherein
the subscriber management apparatus controls a communication timing for each terminal that uses the aggregated tunnel provided in common to each terminal.

### (Supplementary Note 8)

The communication system according to Supplementary Note 6, wherein
when the subscriber management apparatus rejects a new bearer establishment request from one of the terminals, the subscriber management apparatus additionally sets a timer for waiting retry of the terminal in a signal indicating rejection of the bearer establishment request, thereby specifying to the terminal a timing for retransmitting the bearer establishment request.

### (Supplementary Note 9)

The communication system according to Supplementary Note 6, comprising:
a communication timing management apparatus for the subscriber management apparatus, the communication timing management apparatus being configured to transmit a communication request with an identifier for the terminal whose communication path is to be restored;
the subscriber management apparatus, upon reception of the communication request from the communication timing management apparatus, performing paging and instructing restoration of the communication path for the terminal.

### (Supplementary Note 10)

The communication system according to Supplementary Note 1, wherein
the radio aggregating apparatus transmits a handover request upon movement of one of the terminals;
a subscriber management apparatus returns a handover failure response to the terminal;
the terminal transmits a reattach request;
the subscriber management apparatus, upon reception of the reattach request obtains a previous address and information on the user data gateway apparatus used when the terminal is connected before handover and terminal group information from a subscriber management apparatus in a previous visiting area of the terminal;
the subscriber management apparatus transmits a bearer establishment request with the previous address and the terminal group information set therein to another user data mobility providing apparatus connected to the radio aggregating apparatus of a handover destination;
the another mobility providing apparatus transmits to the user data gateway apparatus the bearer establishment request with the previous address and the terminal group information set therein; and
the user data gateway apparatus confirms that the previous address is included in an address band associated with the aggregated tunnel identified from the terminal group information and executes tunnel setting for the another user data mobility providing apparatus, using the previous address again.

### (Supplementary Note 11)

The communication system according to Supplementary Note 1, wherein
when calling one of the terminals in the group by a communication request, a server connected to the external network transmits a packet with an address allocated to the group set as a destination;
the user data mobility providing apparatus, upon reception of the packet through the user data gateway apparatus and the aggregated tunnel generates an incoming packet notification for each terminal in the terminal group and transmits the incoming packet notification to a subscriber management apparatus; and
the subscriber management apparatus makes a paging request to each terminal in the terminal group.

### (Supplementary Note 12)

A communication method comprising:
when setting, based on a request from a terminal, a tunnel between a user data gateway apparatus connected to an external network and a user data mobility providing apparatus configured to perform data transfer between the user data gateway apparatus and a radio aggregating apparatus, thereby providing a mobility function extending across the radio aggregating apparatus,
setting an aggregated tunnel into which tunnels associated with a terminal group of a plurality of terminals including the terminal are aggregated, based on subscriber information of the terminal.

### (Supplementary Note 13)

The communication method according to Supplementary Note 12, comprising:
initially aggregating addresses for the terminal group of the plurality of terminals being able to be accommodated in the same tunnel between the user data gateway apparatus and the user data mobility providing apparatus to be allocated an address band, by the user data gateway apparatus; and
setting the one aggregated tunnel provided in common to the terminal group and forwarding a packet addressed to each of the plurality of terminals of the terminal group to the aggregated tunnel, by the user data gateway apparatus.

### (Supplementary Note 14)

The communication system according to Supplementary Note 12,
allocating an address for each terminal, from the address band for the terminal group dispensed by the user data gateway apparatus, by the user data mobility providing apparatus; and
determining to which terminal a packet forwarded to the user data mobility providing apparatus through the aggregated tunnel is addressed, and then forwarding the packet to the radio aggregating apparatus, by the user data mobility providing apparatus.

### (Supplementary Note 15)

The communication method according to Supplementary Note 12, comprising:
performing band guarantee for the aggregated tunnel provided in common to the terminal group.

### (Supplementary Note 16)

The communication method according to Supplementary Note 12, comprising:
transmitting a communication path restoration request to a subscriber management apparatus by one of the terminals for which bearer establishment has already been performed and a communication path in a radio segment has already been released when the terminal restores the communication path in the radio segment;
checking the upper limit number of simultaneous uses of the bearer by the terminals to be held in the terminal group and returning a bearer update response to restore the communication path when the number of the terminals under communication is within the upper limit number of simultaneous uses, by the user data mobility providing apparatus, upon reception of a bearer update request from the subscriber management apparatus; and
rejecting the communication path restoration request when the number of the terminals under communication exceeds the upper limit number of simultaneous uses, determining the value of a back-off timer according to a use status and a load status of the aggregated bearer, setting the value of the back-off timer in the bearer update response, and then notifying the resulting bearer update response to the terminal, by the user data mobility providing apparatus.

### (Supplementary Note 17)

The communication method according to Supplementary Note 12, comprising:
allocating an address for each terminal from the address band for the terminal group dispensed by the user data gateway apparatus by a subscriber management apparatus; and
not permitting simultaneous communications by a plurality of the terminals in the terminal group and performing terminal grouping for each terminal under control of the radio aggregating apparatus, by the subscriber management apparatus.

### (Supplementary Note 18)

The communication method according to Supplementary Note 17, comprising
controlling a communication timing for each terminal that uses the aggregated tunnel provided in common to each terminal, by the subscriber management apparatus.

### (Supplementary Note 19)

The communication method according to Supplementary Note 17, comprising
when the subscriber management apparatus rejects a new bearer establishment request from one of the terminals, additionally setting a timer for waiting retry of the terminal in a signal indicating rejection of the bearer establishment request, thereby specifying to the terminal a timing for retransmitting the bearer establishment request, by the subscriber management apparatus.

### (Supplementary Note 20)

The communication method according to Supplementary Note 17, comprising:
performing paging and instructing restoration of a communication path for one of the terminals, by the subscriber management apparatus, upon reception of a communication request with an identifier for the terminal whose communication path is to be restored set therein.

### (Supplementary Note 21)

The communication method according to Supplementary Note 12, comprising:
transmitting a handover request upon movement of one of the terminals, by the radio aggregating apparatus;
returning a handover failure response to the terminal, by a subscriber management apparatus;
transmitting a reattach request by the terminal;
obtaining a previous address and information on the user data gateway apparatus used when the terminal is connected before handover and terminal group information from a subscriber management apparatus in a previous visiting area of the terminal and transmitting a bearer establishment request with the previous address and the terminal group information set therein to another user data mobility providing apparatus connected to the radio aggregating apparatus of a handover destination, by the subscriber management apparatus, upon reception of the reattach request;
transmitting to the user data gateway apparatus the bearer establishment request with the previous address and the terminal group information set therein, by the another user data mobility providing apparatus; and
confirming that the previous address is included in an address band associated with the aggregated tunnel identified from the terminal group information and executing tunnel setting for the another user data mobility providing apparatus using the previous address again, by the user data gateway apparatus.

### (Supplementary Note 22)

The communication method according to Supplementary Note 12,
when calling one of the terminals in the group by a communication request, transmitting a packet with an address allocated to the group set as a destination, by a server connected to the external network;
generating an incoming packet notification for each terminal in the group and transmitting the incoming packet notification to a subscriber management apparatus, by the user data mobility providing apparatus, upon reception of the packet through the user data gateway apparatus and the aggregated tunnel; and
making a paging request to each terminal in the group, by the subscriber management apparatus.

### (Supplementary Note 23)

A user data gateway apparatus connected to an external network, wherein
when setting, based on a request from a terminal, a tunnel between the user data gateway apparatus and a user data mobility providing apparatus configured to perform data transfer between the user data gateway apparatus and a radio aggregating apparatus, thereby providing a mobility function extending across the radio aggregating apparatus, the user data gateway apparatus sets an aggregated tunnel into which tunnels associated with a terminal group of a plurality of terminals including the terminal are aggregated, based on subscriber information of the terminal, and when setting the aggregated tunnel, the user data gateway apparatus initially aggregates addresses for the plurality of terminals being able to be accommodated in the same tunnel to be allocated as an address band; and
the user data gateway apparatus sets the one aggregated tunnel provided in common to the terminal group including the terminal, and forwards a packet to each of the plurality of terminals to the aggregated tunnel.

### (Supplementary Note 24)

A user data mobility providing apparatus configured to perform data transfer between a user data gateway apparatus connected to an external network and a radio aggregating apparatus, thereby providing a mobility function extending across the radio aggregating apparatus, wherein
when setting a tunnel between the user data mobility providing apparatus and the user data gateway apparatus based on a request from a terminal, the user data mobility providing apparatus sets an aggregated tunnel into which tunnels associated with a terminal group of terminals including the terminal are aggregated, based on subscriber information of the terminal, and when setting the aggregated tunnel, the user data mobility providing apparatus dispenses an address for each terminal from the address band for the terminal group dispensed by the user data gateway apparatus; and
the user data mobility providing apparatus determines to which terminal a packet forwarded to the user data mobility providing apparatus through the aggregated tunnel provided in common to the terminal group is addressed, and forwards the packet to the radio aggregating apparatus.

### (Supplementary Note 25)

A subscriber management apparatus, wherein
when setting, based on a request from a terminal, a tunnel between a user data gateway apparatus connected to an external network and a user data mobility providing apparatus configured to perform data transfer between the user data gateway apparatus and a radio aggregating apparatus, thereby providing a mobility function extending across the radio aggregating apparatus, the subscriber management apparatus sets an aggregated tunnel into which tunnels associated with a terminal group of terminals including the terminal are aggregated, based on subscriber information of the terminal, and dispenses an address for each terminal from an address band for the terminal group dispensed by the user data gateway apparatus; and
the subscriber management apparatus prohibits simultaneous communications by the terminals in the group and performs terminal grouping for each terminal under control of the radio aggregating apparatus.

### (Supplementary Note 26)

The subscriber management apparatus according to Supplementary Note 25, wherein
the subscriber management apparatus controls a communication timing of each terminal that uses the aggregated tunnel provided in common to each terminal.

### (Supplementary Note 27)

The subscriber management apparatus according to Supplementary Note 25, wherein
when the subscriber management apparatus rejects a new bearer establishment request from one of the terminals, the subscriber management apparatus additionally sets a timer for waiting retry of the terminal in a signal indicating rejection of the bearer establishment request, thereby specifying to the terminal a timing for retransmitting the bearer establishment request.

### (Supplementary Note 28)

The subscriber management apparatus according to Supplementary Note 25, wherein
the subscriber management apparatus, upon reception of a communication request with an identifier for one of the terminals whose communication path is to be restored set therein, from a communication timing management apparatus configured to transmit the communication request, the subscriber management apparatus performs paging and instructs restoration of the communication path for the terminal.

Modification and adjustment of each exemplary embodiment and each example are possible within the scope of the overall disclosure (including the claims) of the present invention and based on the basic technical concept of the present invention. Various combinations and selections of various disclosed elements (including each element in each Supplementary Note, each element in each example, each element in each drawing, and the like) are possible within the scope of the claims of the present invention. That is, the present invention naturally includes various variations and modifications that could be made by those skilled in the art according to the overall disclosure including the claims and the technical concept.

### REFERENCE SIGNS LIST

- 1, 1-1, 1-2: terminal (UE)
- 20, 21: radio aggregating apparatus
- 20-1: eNB
- 20-2: NodeB/RNC
- 30, 31: subscriber management apparatus
- 30-1: MME
- 40, 41: user data mobility providing apparatus
- 40-1: SGW
- 40-2: SGSN
- 50: user data gateway apparatus
- 50-1: PGW
- 50-2: GGSN
- 60, 60-1, 60-2: aggregated tunnel
- 70, 70-1, 70-2: per-terminal communication path
- 80: subscriber information database
- 80-1: HSS
- 80-2: HLR
- 90: terminal communication timing management apparatus

## Claims

1. A communication system comprising:
a gateway apparatus (50) connected to an external network; and
a mobility providing apparatus (40) configured to perform data transfer between the mobility providing apparatus (40) and the gateway apparatus (50), **characterized in that**
when setting a tunnel between the gateway apparatus (50) and the mobility providing apparatus (40), an aggregated tunnel (60) that makes the tunnels common among a plurality of terminals (1) grouped is set, based on subscriber information of at least one of the plurality of terminals (1) grouped;
wherein the gateway apparatus (50) is configured to put together addresses for the plurality of terminals (1) accommodated in the aggregated tunnel (60) into an address band for dispensing, and forward a packet addressed to each of the plurality of terminals (1) to the aggregated tunnel (60);
wherein the mobility providing apparatus (40) is configured to dispense an address for each terminal (1), from the address band for the plurality of terminals (1) dispensed by the gateway apparatus (50), and
the mobility providing apparatus (40) is configured to determine to which terminal (1) the packet forwarded to the mobility providing apparatus (40) from the gateway apparatus (50) through the aggregated tunnel (60) is addressed, and then forward the packet to the addressed terminal (1).

2. A communication system comprising:
a gateway apparatus (50) connected to an external network; and
a mobility providing apparatus (40) configured to perform data transfer between the mobility providing apparatus (40) and the gateway apparatus (50), **characterized in that**
when setting a tunnel between the gateway apparatus (50) and the mobility providing apparatus (40), an aggregated tunnel (60) that makes the tunnels common among a plurality of terminals (1) grouped is set, based on subscriber information of at least one of the plurality of terminals (1) grouped;
wherein the gateway apparatus (50) is configured to put together addresses for the plurality of terminals (1) accommodated in the aggregated tunnel (60) into an address band for dispensing, and forward a packet addressed to each of the plurality of terminals (1) to the aggregated tunnel (60); and
further comprising:
a subscriber management apparatus (30) for authenticating each of the plurality of terminals (1), wherein
the subscriber management apparatus (30) is configured to perform grouping the plurality of terminals (1),
the subscriber management apparatus (30) is configured to perform address dispensing for each terminal (1) from the address band for the plurality of terminals (1) dispensed by the gateway apparatus (50).

3. The communication system according to claim 2, further comprising:
a subscriber information database (80) configured to hold subscriber information of the plurality of terminals (1),
the subscriber management apparatus (30) configured to obtain the subscriber information of the at least one of the terminals (1) from the subscriber information database (80), and determine whether or not to set the aggregated tunnel (60), based on terminal group information in the subscriber information.

4. The communication system according to claim 3, wherein the subscriber information of the plurality of terminals (1) held in the subscriber information database (80) includes information on a number of terminals (1) being able to be accommodated in the aggregated tunnel (60) and a number of the terminals (1) being able to simultaneously use the aggregated tunnel (60), as the terminal group information.

5. The communication system according to claim 4, wherein in the case of an Evolved-Universal Terrestrial Radio Access Network, E-UTRAN:
the gateway apparatus (50) includes a Packet Data Network Gateway, PGW (50-1),
the mobility providing apparatus (40) includes a Serving Gateway, SGW (40-1),
the subscriber management apparatus (30) includes a Mobility Management Entity, MME (30-1), and
the subscriber information database (80) includes a Home Subscriber Server, HSS (80-1); and
wherein in the case of a Universal Terrestrial Radio Access Network, UTRAN:
the gateway apparatus (50) includes a PGW (50-1) or a Gateway General Packet Radio Service Support Node, GGSN (50-2),
the mobility providing apparatus (40) includes a Serving General Packet Radio Service Support Node, SGSN (40-2) which serves both as the subscriber management apparatus (30) and the mobility providing apparatus (40), and
the subscriber information database (80) includes a Home Location Register, HLR (80-2).

6. A communication method for a system comprising a gateway apparatus (50) connected to an external network and a mobility providing apparatus (40) that performs data transfer between the mobility providing apparatus (40) and the gateway apparatus (50), **characterized in that** the method comprises:
when setting a tunnel between the gateway apparatus (50) and the mobility providing apparatus (40),
setting an aggregated tunnel (60) that makes the tunnels common among a plurality of terminals (1), based on subscriber information of at least one of the plurality of terminals (1) grouped;
the gateway apparatus (50) putting together addresses for the plurality of terminals (1) accommodated in the aggregated tunnel (60) into an address band to dispense the address band;
the gateway apparatus (50) forwarding a packet addressed to each of the plurality of terminals (1) to the aggregated tunnel (60);
the mobility providing apparatus (40) dispensing an address for each terminal (1), from the address band for the plurality of terminals (1) dispensed by the gateway apparatus (50); and
the mobility providing apparatus (40) determining to which terminal (1) a packet forwarded to the mobility providing apparatus (40) from the gateway apparatus (50) through the aggregated tunnel (60) is addressed, and then forwarding the packet to the addressed terminal (1).

7. A communication method for a system comprising a gateway apparatus (50) connected to an external network and a mobility providing apparatus (40) that performs data transfer between the mobility providing apparatus (40) and the gateway apparatus (50), **characterized in that** the method comprises:
when setting a tunnel between the gateway apparatus (50) and the mobility providing apparatus (40),
setting an aggregated tunnel (60) that makes the tunnels common among a plurality of terminals (1), based on subscriber information of at least one of the plurality of terminals (1) grouped;
the gateway apparatus (50) putting together addresses for the plurality of terminals (1) accommodated in the aggregated tunnel (60) into an address band to dispense the address band;
the gateway apparatus (50) forwarding a packet addressed to each of the plurality of terminals (1) to the aggregated tunnel (60);
grouping the plurality of terminals (1), by a subscriber management apparatus (30) that authenticates each of the plurality of terminals (1); and
the subscriber management apparatus (30) dispensing an address for each terminal (1) from the address band for the plurality of terminals (1) allocated from the gateway apparatus (50).

8. The communication method according to claim 7, comprising:
obtaining the subscriber information of the at least one of the terminals (1) from a subscriber information database (80) that holds subscriber information of each of the plurality of terminals (1), and determining whether or not to set the aggregated tunnel (60), based on terminal group information in the subscriber information, by the subscriber management apparatus (30).

9. The communication method according to claim 8, wherein the subscriber information of each of the plurality of terminals (1) held in the subscriber information database (80) includes information on a number of the terminals (1) being able to be accommodated in the aggregated tunnel (60) and a number of the terminals (1) being able to simultaneously use the aggregated tunnel (60), as the terminal group information.

10. The communication method according to claim 9, wherein the gateway apparatus (50) includes a Packet Data Network Gateway, PGW (50-1), or a Gateway General Packet Radio Service Support Node, GGSN (50-2),
the mobility providing apparatus (40) includes a Serving Gateway, SGW (40-1), or a Serving General Packet Radio Service Support Node, SGSN (40-2),
the subscriber management apparatus (30) includes a Mobility Management Entity, MME (30-1), or the SGSN serves both as the subscriber management apparatus (30) and the mobility providing apparatus (40), and
the subscriber information database (80) includes a Home Subscriber Server, HSS (80-1), or a Home Location Register, HLR (80-2).

11. A gateway apparatus (50) connected to an external network, **characterized in that** when setting a tunnel between the gateway apparatus (50) and a mobility providing apparatus (40) that performs data transfer between the mobility providing apparatus (40) and the gateway apparatus (50),
the gateway apparatus (50) is configured to set an aggregated tunnel (60) that makes the tunnels common among a plurality of terminals (1) grouped, based on subscriber information of at least one of the plurality of terminals (1) grouped, and aggregate addresses for the plurality of terminals (1) being able to be accommodated in the same tunnel to be allocated as an address band, and
the gateway apparatus (50) is configured to forward a packet addressed to each of the plurality of terminals (1) to the aggregated tunnel (60).

12. A mobility providing apparatus (40)t configured to perform data transfer with a gateway apparatus (50) connected to an external network, **characterized in that**
when setting a tunnel between the mobility providing apparatus (40) and the gateway apparatus (50), the mobility providing apparatus (40) is configured to set an aggregated tunnel (60) that makes the tunnels common among a plurality of terminals (1) grouped, based on subscriber information of at least one of the plurality of terminals (1) grouped, and
the mobility providing apparatus (40) is configured to dispense an address for each terminal (1) from the address band for the grouped terminals (1) dispensed by the gateway apparatus (50), determine to which terminal (1) a packet forwarded to the mobility providing apparatus (40) from the gateway apparatus (50) through the aggregated tunnel (60) is addressed, and forward the packet to the addressed terminal (1).

13. A subscriber management apparatus (30) for controlling and managing a terminal (1) of a subscriber, **characterized in that** when setting a tunnel between a gateway apparatus (50) connected to an external network and a mobility providing apparatus (40) that performs data transfer with the gateway apparatus (50), the subscriber management apparatus (30) is configured to set an aggregated tunnel (60) that makes the tunnels common among a plurality of terminals (1) grouped, based on subscriber information of at least one of the plurality of terminals (1) grouped,
the subscriber management apparatus (30) is configured to dispense an address for each terminal (1) from an address band for the plurality of terminals (1) dispensed by the gateway apparatus (50); and
the subscriber management apparatus (30) is configured to prohibit simultaneous communications by the terminals (1) in the group and perform terminal grouping for each terminal (1) under control of a radio aggregating apparatus (20).

## Patentansprüche

1. Kommunikationssystem, das aufweist:
eine Gateway-Vorrichtung (50), die mit einem externen Netzwerk verbunden ist; und
eine Mobilitätsbereitstellungsvorrichtung (40), die konfiguriert ist, um eine Datenübertragung zwischen der Mobilitätsbereitstellungsvorrichtung (40) und der Gateway-Vorrichtung (50) durchzuführen, **dadurch gekennzeichnet, dass**
wenn ein Tunnel zwischen der Gateway-Vorrichtung (50) und der Mobilitätsbereitstellungsvorrichtung (40) festgelegt wird, ein vereinigter Tunnel (60), der die Tunnel zwischen mehreren Endgeräten (1), die gruppiert sind, gemeinsam macht, basierend auf Teilnehmerinformationen wenigstens eines der mehreren gruppierten Endgeräte (1) festgelegt wird;
wobei die Gateway-Vorrichtung (50) konfiguriert ist, um Adressen für die mehreren Endgeräte (1), die in dem vereinigten Tunnel (60) aufgenommen sind, in ein Adressband für die Vergabe zusammenzufassen, um ein Paket, das an jedes einzelne der mehreren Endgeräte (1) adressiert ist, an den vereinigten Tunnel (60) weiterzuleiten;
wobei die Mobilitätsbereitstellungsvorrichtung (40) konfiguriert ist, um eine Adresse für jedes Endgerät (1) aus dem Adressband für die mehreren Endgeräte (1), das von der Gateway-Vorrichtung (50) vergeben wird, zu vergeben, und
wobei die Mobilitätsbereitstellungsvorrichtung (40) konfiguriert ist, um zu bestimmen, an welches Endgerät (1) das Paket adressiert ist, das von der Gateway-Vorrichtung (50) durch den vereinigten Tunnel (60) an die Mobilitätsbereitstellungsvorrichtung (40) weitergeleitet wird, und das Paket dann an das adressierte Endgerät (1) weiterzuleiten.

2. Kommunikationssystem, das aufweist:
eine Gateway-Vorrichtung (50), die mit einem externen Netzwerk verbunden ist; und
eine Mobilitätsbereitstellungsvorrichtung (40), die konfiguriert ist, um eine Datenübertragung zwischen der Mobilitätsbereitstellungsvorrichtung (40) und der Gateway-Vorrichtung (50) durchzuführen, **dadurch gekennzeichnet, dass**
wenn ein Tunnel zwischen der Gateway-Vorrichtung (50) und der Mobilitätsbereitstellungsvorrichtung (40) festgelegt wird, ein vereinigter Tunnel (60), der die Tunnel zwischen mehreren Endgeräten (1), die gruppiert sind, gemeinsam macht, basierend auf Teilnehmerinformationen wenigstens eines der mehreren gruppierten Endgeräte festgelegt wird;
wobei die Gateway-Vorrichtung (50) konfiguriert ist, um Adressen für die mehreren Endgeräte (1), die in dem vereinigten Tunnel (60) aufgenommen sind, in ein Adressband für die Vergabe zusammenzufassen, um ein Paket, das an jedes einzelne der mehreren Endgeräte (1) adressiert ist, an den vereinigten Tunnel (60) weiterzuleiten; und
das ferner aufweist:
eine Teilnehmerverwaltungsvorrichtung (30) zum Authentifizieren jedes einzelne der mehreren Endgeräte (1), wobei
die Teilnehmerverwaltungsvorrichtung (30) konfiguriert ist, um die Gruppierung der mehreren Endgeräte (1) durchzuführen,
wobei die Teilnehmerverwaltungsvorrichtung (30) konfiguriert ist, um die Adressvergabe für jedes Endgerät (1) aus dem Adressband für die mehreren Endgeräte (1), das von der Gateway-Vorrichtung (50) vergeben wird, durchzuführen.

3. Kommunikationssystem nach Anspruch 2, das ferner aufweist:
eine Teilnehmerinformationsdatenbank (80), die konfiguriert ist, um Teilnehmerinformationen der mehreren Endgeräte (1) zu halten,
wobei die Teilnehmerverwaltungsvorrichtung (30) konfiguriert ist, um die Teilnehmerinformationen des wenigstens einen der Endgeräte (1) aus der Teilnehmerinformationsdatenbank (80) zu erhalten und basierend auf Endgerätgruppeninformationen zu bestimmen, ob der vereinigte Tunnel (60) festgelegt werden soll oder nicht.

4. Kommunikationssystem nach Anspruch 3, wobei die Teilnehmerinformationen der mehreren Endgeräte (1), die in der Teilnehmerinformationsdatenbank (80) gehalten werden, Informationen über eine Anzahl von Endgeräten (1), die in dem vereinigten Tunnel (60) aufgenommen werden können, und eine Anzahl der Endgeräte (1), die fähig sind, den vereinigten Tunnel (60) gleichzeitig zu verwenden, als die Endgerätgruppeninformationen umfassen.

5. Kommunikationssystem nach Anspruch 4, wobei in dem Fall eines fortentwickelten universellen terrestrischen Funkzugangsnetzwerks E-UTRAN:
die Gateway-Vorrichtung (50) ein Paketdatennetzwerk-Gateway PGW (50-1) umfasst,
die Mobilitätsbereitstellungsvorrichtung (40) ein betreuendes Gateway SGW (40-1) umfasst,
die Teilnehmerverwaltungsvorrichtung (30) eine Mobilitätsverwaltungsfunktionseinheit MME (30-1) umfasst, und
die Teilnehmerinformationsdatenbank (80) einen Heimatteilnehmerserver HSS (80-1) umfasst; und
wobei in dem Fall eines universellen terrestrischen Funkzugangsnetzwerks UTRAN:
die Gateway-Vorrichtung (50) ein PGW (50-1) oder einen allgemeinen Gateway-Paketfunkdienstunterstützungsknoten GGSN (50-2) umfasst,
die Mobilitätsbereitstellungsvorrichtung (40) einen betreuenden allgemeinen Paketfunkdienstunterstützungsknoten SGSN (40-2) umfasst, der sowohl als die Teilnehmerverwaltungsvorrichtung (30) als auch als die Mobilitätsbereitstellungsvorrichtung (40) dient, und
die Teilnehmerinformationsdatenbank (80) ein Heimatstandortregister HLR (80-2) umfasst.

6. Kommunikationsverfahren für ein System, das eine Gateway-Vorrichtung (50), die mit einem externen Netzwerk verbunden ist, und eine Mobilitätsbereitstellungsvorrichtung (40), die die Datenübertragung zwischen der Mobilitätsbereitstellungsvorrichtung (40) und der Gateway-Vorrichtung (50) durchführt, aufweist, **dadurch gekennzeichnet, dass** das Verfahren aufweist:
wenn ein Tunnel zwischen der Gateway-Vorrichtung (50) und der Mobilitätsbereitstellungsvorrichtung (40) festgelegt wird,
Festlegen eines vereinigten Tunnels (60), der die Tunnel zwischen mehreren Endgeräten (1) basierend auf Teilnehmerinformationen wenigstens eines der mehreren gruppierten Endgeräte gemeinsam macht;
Adressen für die mehreren Endgeräte (1), die in dem vereinigten Tunnel (60) aufgenommen sind, in ein Adressband für die Vergabe des Adressbands durch die Gateway-Vorrichtung (50) zusammengefasst werden;
Weiterleiten eines Pakets, das an jedes einzelne der mehreren Endgeräte (1) adressiert ist, an den vereinigten Tunnel (60);
Vergeben einer Adresse für jedes Endgerät (1) aus dem Adressband für die mehreren Endgeräte (1), das von der Gateway-Vorrichtung (50) vergeben wird, durch die Gateway-Vorrichtung (50); und
Bestimmen, an welches Endgerät (1) ein Paket, das von der Gateway-Vorrichtung (50) durch den vereinigten Tunnel (60) an die Mobilitätsbereitstellungsvorrichtung (40) weitergeleitet wird, adressiert ist, und dann Weiterleiten des Pakets an das adressierte Endgerät (1) durch die Mobilitätsbereitstellungsvorrichtung (40).

7. Kommunikationsverfahren für ein System, das eine Gateway-Vorrichtung (50), die mit einem externen Netzwerk verbunden ist, und eine Mobilitätsbereitstellungsvorrichtung (40), die die Datenübertragung zwischen der Mobilitätsbereitstellungsvorrichtung (40) und der Gateway-Vorrichtung (50) durchführt, aufweist, **dadurch gekennzeichnet, dass** das Verfahren aufweist:
wenn ein Tunnel zwischen der Gateway-Vorrichtung (50) und der Mobilitätsbereitstellungsvorrichtung (40) festgelegt wird,
Festlegen eines vereinigten Tunnels (60), der die Tunnel zwischen mehreren Endgeräten (1) basierend auf Teilnehmerinformationen wenigstens eines der mehreren gruppierten Endgeräte gemeinsam macht;
Adressen für die mehreren Endgeräte (1), die in dem vereinigten Tunnel (60) aufgenommen sind, in ein Adressband für die Vergabe des Adressbands durch die Gateway-Vorrichtung (50) zusammengefasst werden;
Weiterleiten eines Pakets, das an jedes einzelne der mehreren Endgeräte (1) adressiert ist, an den vereinigten Tunnel (60);
Gruppieren der mehreren Endgeräte (1) durch eine Teilnehmerverwaltungsvorrichtung (30), die jedes einzelne der mehreren Endgeräte (1) authentifiziert; und
Vergeben einer Adresse für jedes Endgerät (1) aus dem Adressband für die mehreren Endgeräte (1), das von der Gateway-Vorrichtung (50) vergeben wird, durch die Teilnehmerverwaltungsvorrichtung (30).

8. Kommunikationsverfahren nach Anspruch 7, das aufweist:
Erhalten der Teilnehmerinformationen des wenigstens einen der Endgeräte aus einer Teilnehmerinformationsdatenbank (80), die Teilnehmerinformationen jedes einzelne der mehreren Endgeräte (1) hält, und basierend auf Endgerätgruppeninformationen Bestimmen, ob der vereinigte Tunnel (60) festgelegt werden soll oder nicht, durch die Teilnehmerverwaltungsvorrichtung (30).

9. Kommunikationsverfahren nach Anspruch 8, wobei die Teilnehmerinformationen jedes einzelne der mehreren Endgeräte (1), die in der Teilnehmerinformationsdatenbank (80) gehalten werden, Informationen über eine Anzahl der Endgeräte (1), die in dem vereinigten Tunnel (60) aufgenommen werden können, und eine Anzahl der Endgeräte (1), die fähig sind, den vereinigten Tunnel (60) gleichzeitig zu verwenden, als die Endgerätgruppeninformationen umfassen.

10. Kommunikationsverfahren nach Anspruch 9, wobei die Gateway-Vorrichtung (50) ein Paketdatennetzwerk-Gateway PGW (50-1) oder einen allgemeinen Gateway-Paketfunkdienstunterstützungsknoten GGSN (50-2) umfasst,
die Mobilitätsbereitstellungsvorrichtung (40) ein betreuendes Gateway SGW (40-1) oder einen betreuenden allgemeinen Paketfunkdienstunterstützungsknoten SGSN (40-2) umfasst,
die Teilnehmerverwaltungsvorrichtung (30) eine Mobilitätsverwaltungsfunktionseinheit MME (30-1) umfasst, oder der SGSN sowohl als die Teilnehmerverwaltungsvorrichtung (30) als auch als die Mobilitätsbereitstellungsvorrichtung (40) dient, und
die Teilnehmerinformationsdatenbank (80) einen Heimatteilnehmerserver HSS (80-1) oder ein Heimatstandortregister HLR (80-2) umfasst.

11. Gateway-Vorrichtung (50), die mit einem externen Netzwerk verbunden ist, **dadurch gekennzeichnet, dass**, wenn ein Tunnel zwischen der Gateway-Vorrichtung (50) und einer Mobilitätsbereitstellungsvorrichtung (40), die die Datenübertragung zwischen der einer Mobilitätsbereitstellungsvorrichtung (40) und der Gateway-Vorrichtung (50) bereitstellt, festgelegt wird,
die Gateway-Vorrichtung (50) konfiguriert ist, um einen vereinigten Tunnel (60) festzulegen, der die Tunnel zwischen mehreren Endgeräten (1) basierend auf Teilnehmerinformationen wenigstens eines der mehreren gruppierten Endgeräte (1) gruppiert und Adressen für die mehreren Endgeräte (1), die fähig sind, in dem gleichen Tunnel aufgenommen zu werden, vereinigt, um als ein Adressband zugewiesen zu werden, und
wobei die Gateway-Vorrichtung (50) konfiguriert ist, um ein Paket, das an jedes einzelne der mehreren Endgeräte (1) des vereinigten Tunnels (60) adressiert ist, an den vereinigten Tunnel (60) weiterzuleiten.

12. Mobilitätsbereitstellungsvorrichtung (40), die konfiguriert ist, um eine Datenübertragung mit einer Gateway-Vorrichtung (50), die mit einem externen Netzwerk verbunden ist, durchzuführen, **dadurch gekennzeichnet, dass**
wenn ein Tunnel zwischen der Mobilitätsbereitstellungsvorrichtung (40) und der Gateway-Vorrichtung (50) festgelegt wird, die Mobilitätsbereitstellungsvorrichtung (40) konfiguriert ist, um basierend auf Teilnehmerinformationen wenigstens eines der mehreren gruppierten Endgeräte (1) einen vereinigten Tunnel (60) festzulegen, der die Tunnel zwischen mehreren Endgeräten (1) gruppiert, und
wobei die Mobilitätsbereitstellungsvorrichtung (40) konfiguriert ist, um eine Adresse für jedes Endgerät (1) aus dem Adressband für die gruppierten Endgeräte (1), das von der Gateway-Vorrichtung (50) vergeben wird, zu vergeben, zu bestimmen, an welches Endgerät (1) ein Paket adressiert ist, das von der Gateway-Vorrichtung (50) durch den vereinigten Tunnel (60) an die Mobilitätsbereitstellungsvorrichtung (40) weitergeleitet wird, und das Paket an das adressierte Endgerät (1) weiterzuleiten.

13. Teilnehmerverwaltungsvorrichtung (30) zum Steuern und Verwalten eines Endgeräts (1) eines Teilnehmers, **dadurch gekennzeichnet, dass**, wenn ein Tunnel zwischen einer Gateway-Vorrichtung (50), die mit einem externen Netzwerk verbunden ist, und einer Mobilitätsbereitstellungsvorrichtung (40), die die Datenübertragung mit der Gateway-Vorrichtung (50) durchführt, festgelegt wird, die Teilnehmerverwaltungsvorrichtung (30) konfiguriert ist, um basierend auf Teilnehmerinformationen wenigstens eines der mehreren gruppierten Endgeräte (1) einen vereinigten Tunnel (60) festzulegen, der die Tunnel zwischen mehreren Endgeräten (1) gruppiert,
die Teilnehmerverwaltungsvorrichtung (30) konfiguriert ist, um eine Adresse für jedes Endgerät (1) aus einem Adressband für die mehreren Endgeräte (1), das von der Gateway-Vorrichtung (50) vergeben wird, zu vergeben; und
die Teilnehmerverwaltungsvorrichtung (30) konfiguriert ist, um gleichzeitige Kommunikationen durch die Endgeräte (1) in der Gruppe zu unterbinden und eine Endgerätgruppierung für jedes Endgerät (1) unter der Steuerung einer Funkvereinigungsvorrichtung (20) durchzuführen.

## Revendications

1. Système de communication comprenant :
un appareil de passerelle (50) connecté à un réseau externe ; et
un appareil de fourniture de mobilité (40) configuré pour effectuer un transfert de données entre l'appareil de fourniture de mobilité (40) et l'appareil de passerelle (50), **caractérisé en ce que**
lors de l'établissement d'un tunnel entre l'appareil de passerelle (50) et l'appareil de fourniture de mobilité (40), un tunnel agrégé (60) qui rend les tunnels communs parmi une pluralité de terminaux (1) regroupés est établi, sur la base d'informations d'abonné d'au moins un de la pluralité de terminaux (1) regroupés ;
dans lequel l'appareil de passerelle (50) est configuré pour mettre ensemble des adresses pour la pluralité de terminaux (1) logés dans le tunnel agrégé (60) dans une bande d'adresses pour distribution, et réacheminer un paquet adressé à chacun de la pluralité de terminaux (1) vers le tunnel agrégé (60) ;
dans lequel l'appareil de fourniture de mobilité (40) est configuré pour distribuer une adresse pour chaque terminal (1), à partir de la bande d'adresses pour la pluralité de terminaux (1) distribuée par l'appareil de passerelle (50), et
l'appareil de fourniture de mobilité (40) est configuré pour déterminer à quel terminal (1) le paquet réacheminé vers l'appareil de fourniture de mobilité (40) depuis l'appareil de passerelle (50) à travers le tunnel agrégé (60) est adressé, et ensuite réacheminer le paquet vers le terminal adressé (1).

2. Système de communication comprenant :
un appareil de passerelle (50) connecté à un réseau externe ; et
un appareil de fourniture de mobilité (40) configuré pour effectuer un transfert de données entre l'appareil de fourniture de mobilité (40) et l'appareil de passerelle (50), **caractérisé en ce que**
lors de l'établissement d'un tunnel entre l'appareil de passerelle (50) et l'appareil de fourniture de mobilité (40), un tunnel agrégé (60) qui rend les tunnels communs parmi une pluralité de terminaux (1) regroupés est établi, sur la base d'informations d'abonné d'au moins un de la pluralité de terminaux (1) regroupés ;
dans lequel l'appareil de passerelle (50) est configuré pour mettre ensemble des adresses pour la pluralité de terminaux (1) logés dans le tunnel agrégé (60) dans une bande d'adresses pour distribution, et réacheminer un paquet adressé à chacun de la pluralité de terminaux (1) vers le tunnel agrégé (60) ; et
comprenant en outre :
un appareil de gestion d'abonné (30) pour authentifier chacun de la pluralité de terminaux (1), dans lequel
l'appareil de gestion d'abonné (30) est configuré pour effectuer le regroupement de la pluralité de terminaux (1),
l'appareil de gestion d'abonné (30) est configuré pour effectuer une distribution d'adresse pour chaque terminal (1) à partir de la bande d'adresses pour la pluralité de terminaux (1) distribuée par l'appareil de passerelle (50).

3. Système de communication selon la revendication 2, comprenant en outre :
une base de données d'informations d'abonné (80) configurée pour contenir des informations d'abonné de la pluralité de terminaux (1),
l'appareil de gestion d'abonné (30) configuré pour obtenir les informations d'abonné du au moins un des terminaux (1) à partir de la base de données d'informations d'abonné (80), et déterminer si oui ou non établir le tunnel agrégé (60), sur la base d'informations de groupe de terminaux dans les informations d'abonné.

4. Système de communication selon la revendication 3, dans lequel les informations d'abonné de la pluralité de terminaux (1) contenues dans la base de données d'informations d'abonné (80) comprennent des informations sur un nombre de terminaux (1) pouvant être logés dans le tunnel agrégé (60) et un nombre des terminaux (1) pouvant utiliser simultanément le tunnel agrégé (60), en tant qu'informations de groupe de terminaux.

5. Système de communication selon la revendication 4, dans lequel dans le cas d'un Réseau d'accès radio terrestre universel évolué, E-UTRAN :
l'appareil de passerelle (50) comprend une Passerelle de Réseau de données par paquets, PGW (50-1) ,
l'appareil de fourniture de mobilité (40) comprend une Passerelle de desserte, SGW (40-1),
l'appareil de gestion d'abonné (30) comprend une Entité de gestion de mobilité, MME (30-1), et
la base de données d'informations d'abonné (80) comprend un Serveur d'abonné résidentiel, HSS (80-1) ; et
dans lequel dans le cas d'un Réseau d'accès radio terrestre universel, UTRAN :
l'appareil de passerelle (50) comprend une PGW (50-1) ou un Noeud de support de service général de radiocommunication par paquets de transit, GGSN (50-2),
l'appareil de fourniture de mobilité (40) comprend un Noeud de support de service général de radiocommunication par paquets de desserte, SGSN (40-2) qui sert à la fois comme l'appareil de gestion d'abonné (30) et l'appareil de fourniture de mobilité (40), et
la base de données d'informations d'abonné (80) comprend un Enregistreur de localisation nominal, HLR (80-2).

6. Procédé de communication pour un système comprenant un appareil de passerelle (50) connecté à un réseau externe et un appareil de fourniture de mobilité (40) qui effectue un transfert de données entre l'appareil de fourniture de mobilité (40) et l'appareil de passerelle (50), **caractérisé en ce que** le procédé comprend :
lors de l'établissement d'un tunnel entre l'appareil de passerelle (50) et l'appareil de fourniture de mobilité (40),
l'établissement d'un tunnel agrégé (60) qui rend les tunnels communs parmi une pluralité de terminaux (1), sur la base d'informations d'abonné d'au moins un de la pluralité de terminaux (1) regroupés ;
l'appareil de passerelle (50) mettant ensemble des adresses pour la pluralité de terminaux (1) logés dans le tunnel agrégé (60) dans une bande d'adresses pour distribuer la bande d'adresses ;
l'appareil de passerelle (50) réacheminant un paquet adressé à chacun de la pluralité de terminaux (1) vers le tunnel agrégé (60) ;
l'appareil de fourniture de mobilité (40) distribuant une adresse pour chaque terminal (1), à partir de la bande d'adresses pour la pluralité de terminaux (1) distribuée par l'appareil de passerelle (50) ; et
l'appareil de fourniture de mobilité (40) déterminant à quel terminal (1) un paquet réacheminé vers l'appareil de fourniture de mobilité (40) depuis l'appareil de passerelle (50) à travers le tunnel agrégé (60) est adressé, et ensuite réacheminant le paquet vers le terminal adressé (1).

7. Procédé de communication pour un système comprenant un appareil de passerelle (50) connecté à un réseau externe et un appareil de fourniture de mobilité (40) qui effectue un transfert de données entre l'appareil de fourniture de mobilité (40) et l'appareil de passerelle (50), **caractérisé en ce que** le procédé comprend :
lors de l'établissement d'un tunnel entre l'appareil de passerelle (50) et l'appareil de fourniture de mobilité (40),
l'établissement d'un tunnel agrégé (60) qui rend les tunnels communs parmi une pluralité de terminaux (1), sur la base d'informations d'abonné d'au moins un de la pluralité de terminaux (1) regroupés ;
l'appareil de passerelle (50) mettant ensemble des adresses pour la pluralité de terminaux (1) logés dans le tunnel agrégé (60) dans une bande d'adresses pour distribuer la bande d'adresses ;
l'appareil de passerelle (50) réacheminant un paquet adressé à chacun de la pluralité de terminaux (1) vers le tunnel agrégé (60) ;
le regroupement de la pluralité de terminaux (1), par un appareil de gestion d'abonné (30) qui authentifie chacun de la pluralité de terminaux (1); et
l'appareil de gestion d'abonné (30) distribuant une adresse pour chaque terminal (1) à partir de la bande d'adresses pour la pluralité de terminaux (1) allouée depuis l'appareil de passerelle (50).

8. Procédé de communication selon la revendication 7, comprenant :
l'obtention des informations d'abonné du au moins un des terminaux (1) à partir d'une base de données d'informations d'abonné (80) qui contient des informations d'abonné de chacun de la pluralité de terminaux (1), et la détermination de si oui ou non établir le tunnel agrégé (60), sur la base d'informations de groupe de terminaux dans les informations d'abonné, par l'appareil de gestion d'abonné (30).

9. Procédé de communication selon la revendication 8, dans lequel les informations d'abonné de chacun de la pluralité de terminaux (1) contenues dans la base de données d'informations d'abonné (80) comprennent des informations sur un nombre des terminaux (1) pouvant être logés dans le tunnel agrégé (60) et un nombre des terminaux (1) pouvant utiliser simultanément le tunnel agrégé (60), en tant qu'informations de groupe de terminaux.

10. Procédé de communication selon la revendication 9, dans lequel l'appareil de passerelle (50) comprend une Passerelle de Réseau de données par paquets, PGW (50-1), ou un Noeud de support de service général de radiocommunication par paquets de transit, GGSN (50-2),
l'appareil de fourniture de mobilité (40) comprend une Passerelle de desserte, SGW (40-1), ou un Noeud de support de service général de radiocommunication par paquets de desserte, SGSN (40-2),
l'appareil de gestion d'abonné (30) comprend une Entité de gestion de mobilité, MME (30-1), ou le SGSN sert à la fois comme l'appareil de gestion d'abonné (30) et l'appareil de fourniture de mobilité (40), et
la base de données d'informations d'abonné (80) comprend un Serveur d'abonné résidentiel, HSS (80-1), ou un Enregistreur de localisation nominal, HLR (80-2).

11. Appareil de passerelle (50) connecté à un réseau externe, **caractérisé en ce que** lors de l'établissement d'un tunnel entre l'appareil de passerelle (50) et un appareil de fourniture de mobilité (40) qui effectue un transfert de données entre l'appareil de fourniture de mobilité (40) et l'appareil de passerelle (50),
l'appareil de passerelle (50) est configuré pour établir un tunnel agrégé (60) qui rend les tunnels communs parmi une pluralité de terminaux (1) regroupés, sur la base d'informations d'abonné d'au moins un de la pluralité de terminaux (1) regroupés, et agréger des adresses pour la pluralité de terminaux (1) pouvant être logés dans le même tunnel pour être allouées comme une bande d'adresses, et
l'appareil de passerelle (50) est configuré pour réacheminer un paquet adressé à chacun de la pluralité de terminaux (1) vers le tunnel agrégé (60).

12. Appareil de fourniture de mobilité (40) configuré pour effectuer un transfert de données avec un appareil de passerelle (50) connecté à un réseau externe, **caractérisé en ce que**
lors de l'établissement d'un tunnel entre l'appareil de fourniture de mobilité (40) et l'appareil de passerelle (50), l'appareil de fourniture de mobilité (40) est configuré pour établir un tunnel agrégé (60) qui rend les tunnels communs parmi une pluralité de terminaux (1) regroupés, sur la base d'informations d'abonné d'au moins un de la pluralité de terminaux (1) regroupés, et
l'appareil de fourniture de mobilité (40) est configuré pour distribuer une adresse pour chaque terminal (1) à partir de la bande d'adresses pour les terminaux regroupés (1) distribuée par l'appareil de passerelle (50), déterminer à quel terminal (1) un paquet réacheminé vers l'appareil de fourniture de mobilité (40) depuis l'appareil de passerelle (50) à travers le tunnel agrégé (60) est adressé, et réacheminer le paquet vers le terminal adressé (1).

13. Appareil de gestion d'abonné (30) pour contrôler et gérer un terminal (1) d'un abonné, **caractérisé en ce que** lors de l'établissement d'un tunnel entre un appareil de passerelle (50) connecté à un réseau externe et un appareil de fourniture de mobilité (40) qui effectue un transfert de données avec l'appareil de passerelle (50), l'appareil de gestion d'abonné (30) est configuré pour établir un tunnel agrégé (60) qui rend les tunnels communs parmi une pluralité de terminaux (1) regroupés, sur la base d'informations d'abonné d'au moins un de la pluralité de terminaux (1) regroupés,
l'appareil de gestion d'abonné (30) est configuré pour distribuer une adresse pour chaque terminal (1) à partir d'une bande d'adresses pour la pluralité de terminaux (1) distribuée par l'appareil de passerelle (50) ; et
l'appareil de gestion d'abonné (30) est configuré pour empêcher des communications simultanées par les terminaux (1) dans le groupe et effectuer un regroupement de terminaux pour chaque terminal (1) sous le contrôle d'un appareil d'agrégation radio (20).
